(19) Europäisches Patentamt
European Patent Office
Office européen des brevets

(11) EP 2 888 116 B1

(12) # EUROPÄISCHE PATENTSCHRIFT

(45) Veröffentlichungstag und Bekanntmachung des Hinweises auf die Patenterteilung:
**21.09.2016 Patentblatt 2016/38**

(21) Anmeldenummer: **13750059.1**

(22) Anmeldetag: **15.08.2013**

(51) Int Cl.:
***B42D 25/29*** *(2014.01)* ***B42D 25/42*** *(2014.01)*
***B32B 37/14*** *(2006.01)* ***B32B 37/18*** *(2006.01)*
***B32B 38/00*** *(2006.01)* ***B32B 38/04*** *(2006.01)*
***G03H 1/00*** *(2006.01)* ***G03H 1/02*** *(2006.01)*
***G11B 7/24044*** *(2013.01)* ***B42D 25/328*** *(2014.01)*

(86) Internationale Anmeldenummer:
**PCT/EP2013/067075**

(87) Internationale Veröffentlichungsnummer:
**WO 2014/029686 (27.02.2014 Gazette 2014/09)**

(54) **SICHERHEITS- UND/ODER WERTDOKUMENT ENTHALTEND EIN VISUELL SCHALTBARES FENSTER MIT EINEM HOLOGRAMM**

SECURITY AND/OR VALUE DOCUMENT CONTAINING A VISUAL SWITCHABLE WINDOW WITH A HOLOGRAM

DOCUMENT DE VALEUR ET/OU DE SÉCURITÉ COMPRENANT UNE FENÊTRE COMMUTABLE VISUELLEMENT AVEC UN HOLOGRAMME

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.08.2012 EP 12181440**

(43) Veröffentlichungstag der Anmeldung:
**01.07.2015 Patentblatt 2015/27**

(73) Patentinhaber: **Covestro Deutschland AG**
**51373 Leverkusen (DE)**

(72) Erfinder:
- **TZIOVARAS, Georgios**
  **42275 Wuppertal (DE)**
- **PUDLEINER, Heinz**
  **47800 Krefeld (DE)**
- **PLANKEN, Kira**
  **47547 Goch (DE)**
- **JANKE, Stefan**
  **41379 Brüggen (DE)**
- **WEISER, Marc-Stephan**
  **51377 Leverkusen (DE)**
- **FÄCKE, Thomas**
  **51375 Leverkusen (DE)**

(74) Vertreter: **Levpat**
**c/o Covestro AG**
**Alfred-Nobel-Straße 10**
**40789 Monheim am Rhein (DE)**

(56) Entgegenhaltungen:
**WO-A1-2005/121450 GB-A- 2 347 646**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 888 116 B1

## Beschreibung

Die vorliegende Erfindung betrifft ein Sicherheits- und/oder Wertdokument mit einem Hologramm in einem visuell schaltbaren Fenster als neuartiges Sicherheitselement sowie ein Verfahren zu dessen Herstellung.

Auf dem Markt der Sicherheits- und/oder Wertdokumente, insbesondere Identifikations-Dokumente (ID-Dokumente) besteht der Bedarf an kontinuierlicher Verbesserung der verwendeten Sicherheitsmerkmale sowie an der Entwicklung neuer Sicherheitsmerkmale um potentiellen Fälschern immer einen Schritt voraus zu sein. Die Sicherheitsmerkmale sollen so gestaltet sein, dass eine Fälschung technisch schwierig und rein visuell möglichst einfach zu identifizieren ist.

Sicherheits- und/oder Wertdokument auf Kunststoffbasis, insbesondere Identifikations-Dokumente, wie z.B. ID-Karten, werden heutzutage vorzugsweise ohne den Einsatz von Klebstoffschichten als Mehrschichtverbunde mittels Lamination bei hohen Temperaturen und hohem Druck hergestellt, um ein nachträgliches Auftrennen der Schichtaufbauten zum Austausch von Identifikationsmerkmalen zu verhindern. In diese Mehrschichtverbunde werden vor oder während des Laminierprozesses die entsprechenden Sicherheitsmerkmale eingebracht, die folglich derart gestaltet sein müssen, dass sie den Laminierprozess-Parametern zerstörungsfrei standhalten. Zudem dürfen durch die Sicherheitsmerkmale keine Schwachstellen in den Mehrschichtverbund eingebracht werden, die ein zerstörungsfreies nachträgliches Öffnen des Verbundes wieder ermöglichen würden.

Sicherheitsmerkmale in Sicherheits- und/oder Wertdokumenten werden üblicherweise in drei Sicherheitsstufen eingeteilt:

- Bei Sicherheitsmerkmalen der Stufe 1 handelt es sich um solche, die ohne Verwendung von zusätzlichen Hilfsmitteln rein visuell wahrnehmbar sind.
- Bei Sicherheitsmerkmalen der Stufe 2 handelt es sich um solche, die Hilfsmittel (wie z.B. eine Lupe, einen optischen Filter, ein Lesegerät etc.) benötigen, um sichtbar zu werden.
- Bei Sicherheitsmerkmalen der Stufe 3 handelt es sich um solche, die nur in einem Labor durch forensische Verfahren identifiziert werden können. Dabei geht in der Regel eine zumindest teilweise Zerstörung des Dokuments mit der Analyse einher.

Sicherheitsmerkmale der Stufe 1 können zwar schnell wahrgenommen werden, sind jedoch dahingehend nachteilig, dass mit begrenztem Aufwand ausreichend gute Fälschungen entstehen können.

Sicherheitsmerkmale der Stufe 3 können nur mit extrem hohem Aufwand gefälscht werden, jedoch lässt sich für deren Identifizierung in der Regel eine zumindest teilweise Zerstörung des gesicherten Dokumentes nicht vermeiden.

Es besteht daher vermehrt Bedarf nach Sicherheitsmerkmalen, die zumindest teilweise in die Stufe 2 eingeordnet werden können, da diese die vorgenannten Nachteile nicht aufweisen.

Die Verwendung von Hologrammen in Sicherheits- und/oder Wertdokumenten ist seit vielen Jahren ein beliebtes Mittel um die Fälschungssicherheit dieser Dokumente zu erhöhen. Dabei werden die Hologramme üblicherweise mittels Heißprägen auf die Dokumente aufgeklebt. Bei den verwendeten Holgrammen handelt es sich zum Großteil um Prägehologramme, welche auf der Rückseite mit einem wärmeaktivierbaren Kleber versehen sind. Beim Heißprägevorgang wird der Kleber durch die Wärme des Prägestempels aktiviert, das Hologramm verbindet sich mit dem Dokument und kann dann von seiner Trägerfolie gelöst werden.

Prägehologramme selbst werden in einem Prägeschritt aus einer Präzisionsform (Nickelshim) in einen thermoplastischen Kunststoff eingeformt. Derartige Oberflächenhologramme haben typischerweise eine Prägedicke von weniger als einem Mikrometer. Die Art dieser Hologramme begrenzt deren Lichteffizienz allerdings auf ca. 30%, d.h. maximal 30% des einfallenden Lichts werden durch das Hologramm in Richtung des Betrachters gebeugt. Aus diesem Grund werden diese meistens nachträglich metallisiert oder gleich in metallisierten Folien eingeprägt, um deren visuelle Sichtbarkeit zu erhöhen. Zudem zeigen diese Hologramme ein "Regenbogen" artiges polychromatisches Farbbild. Um die Fälschungssicherheit der Dokumente und die Lebensdauer der Hologramme zu erhöhen, werden Hologramme auch in Dokumenten aus Kunststoff einlaminiert. Dabei werden die Hologramme auf den innenliegenden Folien aufgeprägt, und dann mit transparenten Folien überdeckt, um deren Sichtbarkeit zu gewährleisten.

In jüngster Zeit werden zudem auch eine neue Klasse an Hologrammen in Sicherheitsdokumenten verwendet, die sich durch ihre hohe optische Effizienz (Beugungseffizienz > 90%) und durch ihre einheitliche Farbigkeit auszeichnen. Man nennt diese Hologramme Volumenhologramme, da deren diffraktive Struktur in der gesamten Schichtdicke (meist 10 - 20 $\mu$m) eingeschrieben wurde. Volumenhologramme zeigen ein ausgeprägt winkelabhängiges Lichtbeugungsverhalten. So sind diese unter bestimmten Winkeln durchsichtig (off Bragg) und unter anderen deutlich sichtbar (on Bragg).

Um die Sicherheit gegen Fälschungen weiter zu erhöhen, enthalten manche Sicherheits- und/oder Wertdokumente, insbesondere in Kartenform an einer Stelle ein transparentes Fenster, z.B. der aktuelle Führerschein von Schweden. Ein solches Fensters hat die Sicherheitsfunktion, dass bei einem Versuch, die Karte zu delaminieren oder in irgendeiner Weise zu öffnen, der Folienverbund im transparenten Fenster gestört wird und es stellt sich eine Trübung

oder ein anderer sichtbarer Fehler ein, der anhand der fehlenden Klarheit im Fenster leicht zu erkennen ist.

Darüber hinaus sind im Stand der Technik auch Sicherheits- und/oder Wertdokumente beschrieben, die eine optisch schaltbare Schicht in Verbindung mit Hologrammen als Sicherheitsmerkmal aufweisen. Zur Herstellung entsprechender optisch schaltbarer Schichten sind thermochrome und/oder photochrome Materialien eingesetzt worden.

Die Verwendung eines photochromen Effektes in Kombination mit Volumenhologrammen ist beispielsweise aus Kim, Jeonghun; Kim, Eunkyoung, Proceedings of SPIE (2008), 7118 (Optical Materials in Defence Systems Technology V), 71180F/1-71180F/10. Publisher: Society of Photo-Optical Instrumentation Engineers, CODEN: PSISDG ISSN: 0277-786X, bekannt. Dort wurde das Farbpigment direkt in das Photopolymer gegeben. Durch UV-Belichtung wurde das Material blau und das Hologramm unsichtbar. Dies diente dem Zweck nachzuweisen, dass das Hologramm in authentischem Material geschrieben wurde und damit nicht gefälscht war. Allerdings ist das Einbringen eines zusätzlichen Chromophors in die Photopolymerformulierung äußerst kompliziert, da dieser so ausgewählt werden muss, dass er weder bei der Belichtung, noch beim nachfolgenden UV-Bleichschritt stört.

Die Verwendung von thermochromen Materialien in Verbindung mit Prägehologrammen zur besseren Authentifizierung ist aus den Anmeldungen JP 2012008313 A sowie JP 2012008315 A bekannt. Dennoch sind solche Hologramme durch ihre geringe Fälschungssicherheit für die Verwendung in Sicherheits- und/oder Wertdokumenten nicht geeignet.

WO 2005/121450 A1 offenbart ein Sicherbeitselement mit einem Fenster, das aus einem Mehrschichtverbund gebildet ist, der ein Hologramm aufweist

Es bestand daher weiterhin Bedarf nach neuen und verbesserten Sicherheitsmerkmalen in Sicherheits- und/oder Wertdokumenten, insbesondere nach solchen Sicherheitsmerkmalen, die nicht nur rein optisch wahrnehmbar - und damit wiederum leichter zu fälschen - sind, sondern zusätzlich auch zur vollständigen Ausschöpfung ihres Sicherheitspotential Hilfsmittel benötigen. Darüber hinaus sollten die Sicherheits- und/oder Wertdokumente auch leicht herzustellen sein.

Der vorliegenden Erfindung lag daher die Aufgabe zugrunde, ein Sicherheits- und/oder Wertdokument mit einem solchen neuen und verbesserten Sicherheitsmerkmal bereit zu stellen.

Diese Aufgabe wurde überraschend dadurch gelöst, dass in ein Sicherheits- und/oder Wertdokument ein visuell schaltbares Fenster enthaltend ein Hologramm eingebracht wurde, in dem das Hologramm in einem Zustand nur schlecht sichtbar und das Fenster quasi durchsichtig ist, in einem anderen Zustand hingegen deutlich zu erkennen ist.

Gegenstand der vorliegenden Erfindung ist daher ein Sicherheits- und/oder Wertdokument enthaltend wenigstens ein Fenster, wobei das Fenster aus einem Mehrschichtverbund gebildet wird, dadurch gekennzeichnet, dass der Mehrschichtverbund

- wenigstens eine Schicht (P) enthaltend wenigstens ein Photopolymer, in die wenigstens ein Hologramm (H) eingebracht ist und
- wenigstens eine transparente optisch schaltbare Schicht (O), welche durch Wärme oder Bestrahlung nicht-transparent wird,

aufweist.

Das Fenster im erfindungsgemäßen Sicherheits- und/oder Wertdokument stellt dabei sowohl ein Sicherheitsmerkmal der Stufe 1, da die Transparenz des Fensters bei einem Fälschungsversuch getrübt wird, als auch ein Sicherheitsmerkmal der Stufe 2 dar, da zum Schalten der optisch schaltbaren Schicht der Einsatz von Hilfsmitteln erforderlich ist.

Bevorzugt handelt es sich bei dem Hologramm (H) um ein Volumenhologramm, besonders bevorzugt um ein Reflektionshologramm.

Solche bevorzugten Hologramme haben den Vorteil, dass sie aufgrund ihres winkelabhängigen Lichtbeugungsverhaltens unter bestimmten Winkeln völlig durchsichtig sind (off Bragg), so dass das Fenster in sich völlig durchsichtig erscheint. Unter anderen Winkeln sind solche Hologramme dann zumindest so deutlich sichtbar, dass sie als Sicherheitsmerkmale der Stufe 1 zumindest visuell ohne Hilfsmittel wahrgenommen werden können (on Bragg).

Unter einer optisch schaltbaren Schicht (O) ist im Rahmen der Erfindung zu verstehen, dass sich die Schicht (O) bei Einsatz eines Hilfsmittels derart verändert, dass dies mit dem bloßen Auge von allen Blickwinkeln aus deutlich wahrgenommen werden kann. Bevorzugt ist die Schicht (O) durch Bestrahlung oder Einwirkung von Wärme zwischen völlig durchsichtig und einem deutlich sichtbaren Hologramm mit bevorzugt dunklem Hintergrund schaltbar, besonders bevorzugt unter Einwirkung von UV-Strahlung, Wärme oder sonstiger Strahlung, ganz besonders bevorzugt unter Einwirkung von UV-Strahlung oder Wärme.

Die Schicht (P) und die optisch schaltbare Schicht (O) sind vorzugsweise derart im Fenster positioniert, das sie sich an derselben Stelle im Dokument befinden und sich in der Blickrichtung eines Betrachters weitgehend überlappen, also eine kombinierte optische Funktion zeigen.

Bei der transparenten optisch schaltbaren Schicht (O) handelt es sich bevorzugt um eine Schicht enthaltend

wenigstens ein photochromes und / oder thermochromes Material, wobei selbiges aus photochromen und/oder thermochromen Pigmenten, photochromen und/oder thermochromen Farbstoffen, flüssigkristallinen Materialien, thermochromen Gelen oder thermochromen Lacken oder Tinten bestehen kann.

Photochrome Materialien ändern ihr Lichtabsorptionseigenschaften mit der Bestrahlung durch UV-Licht oder sichtbaren Licht. Mit der Änderung der Lichtabsorptionseigenschaften bei der Bestrahlung durch Infrarotlicht (Wärmestrahlung) spricht man i.d.R. von thermochromen Substanzen. Allerdings umfassen thermochrome Substanzen zusätzlich die Systeme die durch Erwärmen/Abkühlen ebenfalls die Farbe verändern.

Als thermochrome anorganische Substanzen kommen beispielsweise in Frage: 3d Übergangsmetallkomplexe besonders solche auf Basis von Kobalt, Kupfer, Nickel, wie z.B. Dichlorobisethanol-Cobalt(II), Bis-(dialkylamino)-kupfer tetrachlorid, Dialkylamino-kupferpentachlorid, sowie N,N-diethylethylendiamino 3d- Übergangsmetallkomplexe wie M(N,N-diethylethylenediamin)2(x)2 mit M= Cu, Ni und X= Perchlorat und Hexafluoroborat, Tetramere von Kupferiodid-Pyridin Addukten wie Cu4I4(py)4, Distilbene mit Sb-Sb Bindung, Dibismuthane mit Bi-Bi Bindung. Silberdisulfid, gemischte Samariumlanthansulfide Sm(1-x)Ln(x)S, Vanadiumdioxid, Divanadiumtrioxid. Weiterhin können Europium, Terbium, Gadolinium und Neodym-Komplexe von Trifluoroaceteonaten, Betadiketonaten und Benzoylacetonaten verwendet werden.

Als thermochrome und teilweise auch gleichzeitig photochrome organische Substanzen seien genannt, die in K. Nassau "the Physics and Chemistry of Color", John Wiley & sons Inc., New York 1983, pp 77 ff erwähnten. Dabei eignen sich z.B. Spiropyrane, Spirooxazine, die zwischen einer farblosen spiroheterozyklischen Form und einer farbigen Merocyaninform schaltbar sind; so z.B. Spiro[indolin-naphtopyran], Spiro[indoline-napthooxazin], Spiro[indolino-quinoxazin], Spiro[indolin-benzopyran], Spiropyrane des 2-Oxaindans, des Azaindanons mit Chromenen, des 5',7'-dimethoxybenzooxazins; Spiropyrane des Dithiolans, Perimidine-spirocyclohexadienone.

Weiterhin können Schiffsche Basen von Salicylaldehyden und aromatischen Amine, Aminopyridine, Aryl- und alkylthienylaminen verwendet werden. Ebenfalls geeignet sind auch Bianthrone, Bianthrylidene und andere sterische gehinderte Ethene, wie z.B. Dixantheneylidene, Bithioxanthrylidene, 9,9'-Fluorenylideneanthrone, 9-Diphenylmethylenanthrone, Xanthylidenanthrone und (2-(Thioxanthen-9-yliden)indan-1,3-dion, Indano[1,2-b]azirine, 4,6,7-tri(alkoxy-phenyl)-1,2,5-thiadiazolo[3,4-c]pyridine, substituierte Bullvalene und Barbaralane, 3,3-Diaryl 3H naphtho[2,1-b]pyrane, 2,2-Diaryl 2H naph-to[1,2-b]pyrane;

Azamethinfarbstoffe wie in EP608019 A1 und darin beschrieben, Dicyanophenylthioverbindungen wie in EP0613889 A2 und darin beschrieben, Diazofarbstoffe wie in WO2007147843 beschrieben, beta-Phenylvinylketone und omega-Phenyl polyacetylvinylketone wie in WO2007085636 beschrieben, 6,11-dihydroxy-naphthacene-5,12-dione wie in WO2006131465 beschrieben und Polythiophenes wie z.B. in US2011248224 beschrieben.

Ebenfalls geeignet sind thermochrome Kompositionen auf Basis von pH-Indikatoren, die auf eine thermische induzierte pH-Änderung reagieren, wobei reversibel thermochrome Leukofarbstoffe, bei denen eine bei einer Temperatur aufschmelzende Kapsel die Farbe bildet und beim Erkalten wieder in eine solche Kapsel erstarrt genutzt werden können. Mögliche Leukofarbstoffe sind z.B. Spirolactone, Fluorane (wie Eosin), Spiropyrane und Fulgide. Als schwache Säuren eignen sich Phenole (Bisphenol A), Parabene, 1,2,3-Triazole und 4-Hydroxycoumarine. Ebenfalls ist es möglich gelartige Systeme mit ph-Indikatoren zu versehen, die bei Temperaturänderung die Farbe ändern. Geeignet sind dabei Polyvinylalkohol/Borax/Surfactant oder Polyalkoxid/Lithiumchlorid/(Wasser) Systeme.

Thermochrome Schichtaufbauten auf Basis von Flüssigkristallenkompositionen können durch Verwendung von reinen Flüssigkristallen, Flüssigkristallslurries oder durch mikroverkapselte Flüssigkristalle aufgebracht werden.

Besonders bevorzugt ist, wenn die optisch schaltbare Schicht (O) organische thermochrome Substanzen, Flüssigkristallkompositionen und pH-Indikator enthaltende Kompositionen enthält.

Als photochrome Farbstoffe kommen beispielsweise bestimmte Spiroverbindungen wie z.B. Spiro[indolinenapthooxazin], wie z.B. 1,3,3-Trimethyl-sprio[indolin-2,3-[3H] napth[2,1-b][1,4]oxazin (NISO), Spiro[indolino-quinoxazin], Spiro[indoline-naphtopyrane], Spiro[indoline-benzopyran], inbesondere 2-substituierte Adamantylpyran-Spiroverbindungen, Spiro[1,8a]dihydroindolizine (DHIs), 6-Nitro-1',33'-trimethylspiro[2H-1-benzopyran-2,2'indolin] (6-Nitro-BIPS), weiterhin Fulgide (Aberchrome 540, Aberchrome 670, Aberchrome 850) und Fulgimide in Frage, die Succinic anhydrid bzw. imid-Derivate mit Substitution in 3-Position durch Alkyl (Ethyliden), Benzyl, 3-furyl, 3-pyrryl, 3-thienyl. Benzofuranly, Indonyl, Benzothienyl, mit Substitution in 4-Position durch Alkyl (z.B. Isopropyliden, Adamantyliden) in Frage. Weiterhin können Diarylethen (BTFTT), 2-H-Chromen und dessen Derivate wie z.B. 2,2-Diphenylchromen, 6,6-Diphenylnaptho(2,1:2,3)pyran-4-d, Diarylnapthopyrane, Azobenzole, Benzotriazole wie z.B. 2-(2'-hydroxy-5'-methylphenyl)benzotriazol genutzt werden.

In bevorzugten Ausführungsformen handelt es sich bei der transparenten optisch schaltbaren Schicht (O) um eine Schicht aus wenigstens einem transparenten thermoplastischen Kunststoff enthaltend wenigstens ein photochromes Pigment oder wenigstens einen photochromen Farbstoff, ganz besonders bevorzugt ein photochromes Pigment.

Als transparente thermoplastische Kunststoffe für die Schicht (O) kommen thermoplastische Kunststoffe ausgewählt aus Polymerisaten von ethylenisch ungesättigten Monomeren und/oder Polykondensaten von bifunktionellen reaktiven Verbindungen in Frage.

Besonders geeignete transparente thermoplastische Kunststoffe sind Polycarbonate oder Copolycarbonate auf Basis von Diphenolen, Poly- oder Copolyacrylate und Poly- oder Copolymethacrylate wie beispielhaft und vorzugsweise Polymethylmethacrylat, Poly- oder Copolymere mit Styrol wie beispielhaft und vorzugsweise transparentes Polystyrol oder Polystyrolacrylnitril (SAN), transparente thermoplastische Polyurethane, sowie Polyolefine, wie beispielhaft und vorzugsweise transparente Polypropylentypen oder Polyolefine auf der Basis von cyclischen Olefinen (z.B. TOPAS®, Hoechst), Poly- oder Copolykondensate der Terephthalsäure oder Naphthalindicarbonsäure, wie beispielhaft und vorzugsweise Poly- oder Copolyethylenterephthalat (PET oder CoPET), glycol-modifiziertes PET (PETG) oder Poly- oder Copolybutylenterephthalat (PBT oder CoPBT), Poly- oder Copolyethylennaphthalat (PEN oder CoPEN) oder Mischungen aus den vorangehend genannten.

Ganz besonders bevorzugt als transparente thermoplastische Kunststoffe für die Schicht (O) sind thermoplastische Polyurethane.

Geeignete thermoplastische Polyurethane (TPU) werden beispielsweise aus linearen Polyolen (Makrodiolen), wie Polyester-, Polyether- oder Polycarbonatdiolen, organischen Diisocyanaten und gegebenenfalls kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Besonders bevorzugt handelt es sich es sich bei der transparenten optisch schaltbaren Schicht (O) um eine Schicht aus wenigstens einem transparenten thermoplastischen Kunststoff enthaltend wenigstens ein photochromes oder thermochromes Material oder Komposition, ganz besonders bevorzugt aus wenigstens einem transparenten thermoplastischen Polyurethan enthaltend wenigstens ein photochromes oder thermochromes Material oder Komposition.

Bevorzugte thermoplastische Polyurethane für die Schicht K im erfindungsgemäßen Sicherheits- und/oder Wertdokument sind Reaktionsprodukte aus

a) organischen Diisocyanaten

b) Polyester- und/ oder Polyetherdiolen, bevorzugt Polyetherdiolen und

c) gegebenenfalls Kettenverlängerern.

Als Diisocyanate a) können aromatische, aliphatische, araliphatische, heterocyclische und cycloaliphatische Diisocyanate oder Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenyl-polymethylen-polyisocyanaten.

Bevorzugt ist der Einsatz von Diisocyanaten und Polydiolen, die zu thermoplastischen Polyurethanen mit Extrusionstemperaturen von 190°C und kleiner umgesetzt werden.

Ebenso ist es bevorzugt, wenn die thermoplastischen Polyurethane sich durch eine hohe Lichtechtheit auszeichnen. Daher ist der Einsatz von aliphatischen oder cycloaliphatischen Diisocyanaten sowie aliphatischen Polydiolen, besonders bevorzugt Polyetherdiolen bevorzugt.

Bevorzugte organische Diisocyanate a) sind aliphatische oder cycloaliphatische Diisocyanate wie Hexamethylendiisocyanat, 2,2,5-Trimethylen-hexamethylendiisocyanat (TMDI) sowie dessen Isomere, Isophorondiisocyanat, 1,4-Cyclohexan-diisocyanat, 1-Methyl-2,4-cyclohexan-diisocyanat und 1-Methyl-2,6-cyclohexan-diisocyanat sowie die entsprechenden Isomerengemische, 4,4'-Dicyclohexylmethan-diisocyanat, 2,4'-Dicyclohexylmethan-diisocyanat und 2,2'-Dicyclohexylmethan-diisocyanat sowie die entsprechenden Isomerengemische.

Bevorzugte Polyetherdiole b) besitzen vorzugsweise zahlenmittleren Molekulargewichte $\overline{M}_n$ von 500 bis 10.000 g/mol, besonders bevorzugt 500 bis 6000 g/mol. Sie können sowohl einzeln als auch in Form von Mischungen untereinander zur Anwendung kommen.

Die zahlenmittleren Molekulargewichte können mittels OH-Zahl Bestimmung gemäß der ASTM D 4274 bestimmt werden.

Geeignete Polyetherdiole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin, 1,2-Butylenoxid und 2,3-Butylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole wie Ethylenglykol, Diethylenglykol, 1,3-Propylenglykol, 1,4-Butandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans und/oder des 1,3-Propylenglykols. Es können auch trifunktionelle Polyether in Anteilen von 0 bis 30 Gew.% bezogen auf die bifunktionellen Polyether eingesetzt werden, jedoch höchstens in solcher Menge, dass ein noch thermoplastisch verarbeitbares Produkt entsteht.

Bevorzugte Polyetherdiole sind Zerewitinoff-aktive Polyetherdiole mit im Mittel mindestens 1,8 bis höchstens 3,0, bevorzugt 1,8 bis 2,2, Zerewitinoff-aktiven Wasserstoffatomen.

Als Zerewitinoff-aktive Wasserstoffatome werden alle an N, O oder S gebundene Wasserstoffatome bezeichnet, die nach einem von Zerewitinoff aufgefundenen Verfahren durch Umsetzung mit Methylmagnesiumhalogenid Methan liefern. Die Bestimmung erfolgt nach der Zerewitinoff-Reaktion, wobei Methylmagnesiumjodid mit der zu untersuchenden Verbindung umgesetzt wird und mit acidem Wasserstoff zu einem Magnesiumsalz und dem entsprechenden Kohlenwasserstoff reagiert. Das entstehende Methan wird gasvolumetrisch bestimmt.

Bevorzugte Kettenverlängerer c) sind Zerewitinoff-aktive Kettenverlängerer, die im Mittel 1,8 bis 3,0 zerewitinoff-aktive Wasserstoffatome aufweisen. Hierunter versteht man neben Aminogruppen, Thiolgruppen oder Carboxylgruppen aufweisenden Verbindungen solche mit zwei bis drei, bevorzugt zwei Hydroxylgruppen. Hxdroxylverbindungen mit zwei bis drei, bevorzugt zwei Hydroxylgruppen sind als Kettenverlängerer besonders bevorzugt.

Als Kettenverlängerungsmittel werden beispielsweise und bevorzugt Diole oder Diamine mit einem Molekulargewicht von 60 bis 500 g/mol, vorzugsweise aliphatische Diole mit 2 bis 14 Kohlenstoffatomen eingesetzt, wie z.B. 1,2-Ethandiol (Ethylenglykol), 1,2-Propandiol, 1,3-Propandiol, 1,4-Butandiol, 2,3-Butandiol, 1,5-Pentandiol, 1,6-Hexandiol, Diethylenglykol und Dipropylenglykol. Geeignet sind jedoch auch Diester der Terephthalsäure mit Diolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-bydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Besonders bevorzugt werden als Kettenverlängerer Ethandiol, 1,2-Propandiol, 1,3-Propandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden.

Besonders bevorzugte Kettenverlängerer c) sind beispielsweise Diole wie Ethylenglykol, 1,4-Butandiol, 1,6-Hexandiol oder deren Gemische.

Die relativen Mengen der Verbindungen b) und c) werden bevorzugt so gewählt, dass das Verhältnis der Summe der Isocyanatgruppen in a) zu der Summe der Zerewitinoff-aktiven Wasserstoffatome in b) und c) 0,85:1 bis 1,2:1 beträgt, besonders bevorzugt 0,9:1 bis 1,1:1.

Die thermoplastischen Polyurethane können gegebenenfalls Katalysatoren d) enthalten. Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den thermoplastischen Polyurethanen beträgt in der Regel etwa 0 bis 5 Gew.-%, bevorzugt 0 bis 2 Gew.-%, bezogen auf das Gesamtgewicht des TPU.

Die thermoplastischen Polyurethane (TPU) können gegebenenfalls als Hilfs- und Zusatzstoffe e) 0 bis zu maximal 20 Gew.-%, bevorzugt 0 bis 10 Gew.-%, bezogen auf das Gesamtgewicht des TPU, der üblichen Hilfs- und Zusatzstoffe enthalten. Typische Hilfs- und Zusatzstoffe sind Pigmente, Farbstoffe, Flammschutzmittel, Stabilisatoren gegen Alterungs- und Witterungseinflüsse, Weichmacher, Gleitund Entformungsmittel, Kettenabbrecher, fungistatisch und bakteriostatisch wirkende Substanzen sowie Füllstoffe und deren Mischungen.

Bevorzugt können als solche Zusatzstoffe unter anderem gegenüber Isocyanaten monofunktionelle Verbindungen in Anteilen bis zu 2 Gew.-%, bezogen auf das Gesamtgewicht des thermoplastischen Polyurethans, als sogenannte Kettenabbrecher oder Entformungshilfen eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Beispiele für weitere Zusatzstoffe sind Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe, beispielsweise Polycarbonate, sowie Weichmacher und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Der Vorteil der Verwendung von TPU als transparentem thermoplastischen Kunststoff in der Schicht (O) liegt unter anderem darin, dass es sich bei TPU um einen Schmelzkleber handelt und damit sowohl eine ausreichende Haftung zur Schicht (P) als auch zu etwaigen weiteren äußeren Schichten im Fenster oder im erfindungsgemäßen Sicherheits- und/oder Wertdokument erzeugt werden kann, die-unter anderem auch aufgrund der integrierten photo- oder thermochromen Materialien in diese Schicht nicht ohne Zerstörung wieder gelöst werden kann.

Unter Transparenz im Rahmen dieser Erfindung ist eine Transmission für Licht der Wellenlänge von 380 nm bis 800 nm von mehr als 70%, bevorzugt von mehr als 80%, besonders bevorzugt von mehr als 85% zu verstehen. Die Transmission kann mit einem BYK Haze-gard plus der Firma BYK Additives & Instruments gemäß ASTM D 1003 gemessen werden.

Bei dem Photopolymer in der Schicht (P) handelt es sich bevorzugt um ein solches hergestellt aus einer Photopolymer-Formulierung umfassend eine isocyanatreaktive Komponente A), eine Polyisocyanat-Komponente B), ein Schreibmonomer C) und einen Photoinitiator D).

Die Polyisocyanat-Komponente A) umfasst wenigstens eine organische Verbindung, die wenigstens zwei NCO-Gruppen aufweist (Polyisocyanat).

Als Polyisocyanat können alle dem Fachmann an sich gut bekannten Verbindungen oder deren Mischungen eingesetzt werden. Diese Verbindungen können auf aromatischer, araliphatischer, aliphatischer oder cycloaliphatischer Basis sein. In untergeordneten Mengen kann die Polyisocyanat-Komponente A) auch Monoisocyanate, d.h. organische Verbindungen mit einer NCO-Gruppe, und / oder ungesättigte Gruppen enthaltende Polyisocyanate umfassen..

Beispiele für geeignete Polyisocyanate sind Butylendiisocyanat, Hexamethylendiisocyanat (HDI), 2,2,4-Trimethylhexamethylendiisocyanat und dessen Isomere (TMDI), Isophorondiisocyanat (IPDI), 1,8-Diisocyanato-4-(isocyanatomethyl)-octan, die isomeren Bis-(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und / oder 2,6-Toluylendiisocyanat, 1,5-Naphthylendiisocyanat, 2,4'- und / oder 4,4'-Diphenylmethandiisocyanat, Triphenylmethan-4,4',4"-triisocyanat oder beliebige Mischungen der vorgenannten Verbindungen.

Monomere Di- oder Triisocyanate mit Urethan-, Harnstoff-, Carbodiimid-, Acylharnstoff-, Isocyanurat-, Allophanat-, Biuret-, Oxadiazintrion-, Uretdion- und/oder Iminooxadiazindionstrukturen können ebenfalls verwendet werden.

Bevorzugt sind Polyisocyanate auf Basis aliphatischer und / oder cycloaliphatischer Di- oder Triisocyanate.

Besonders bevorzugt handelt es sich bei den Polyisocyanaten um di- oder oligomerisierte aliphatische und / oder cycloaliphatische Di- oder Triisocyanate.

Ganz besonders bevorzugte Polyisocyanate sind Isocyanurate, Uretdione und / oder Iminooxadiazindione basierend auf HDI, TMDI, 1,8-Diisocyanato-4-(isocyanatomethyl)-octan oder deren Mischungen.

Die Polyisocyanat-Komponente A) kann auch NCO-funktionelle Prepolymere umfassen oder daraus bestehen. Die Prepolymere können Urethan-, Allophanat-, Biuret- und / oder Amidgruppen aufweisen. Derartige Prepolymere sind beispielsweise durch Umsetzung von Polyisocyanaten A1) mit isocyanatreaktiven Verbindungen A2) erhältlich.

Als Polyisocyanate A1) eignen sich alle bekannten aliphatischen, cycloaliphatischen, aromatischen oder araliphatischen Di- und Triisocyanat. Daneben können auch die bekannten höhermolekularen Folgeprodukte monomerer Di- und / oder Triisocyanate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur jeweils einzeln oder in beliebigen Mischungen untereinander eingesetzt werden.

Beispiele für geeignete monomere Di- oder Triisocyanate, die als Polyisocyanat a1) eingesetzt werden können, sind Butylendiisocyanat, Hexamethylendiisocyanat, Isophorondiisocyanat, Trimethyl-hexamethylen-diisocyanat (TMDI), 1,8-Diisocyanato-4-(isocyanatomethyl)-octan, Isocyanatomethyl-1,8-octandiisocyanat (TIN), 2,4- und / oder 2,6-Toluendiisocyanat.

Als isocyanatreaktive Verbindungen A2) können bevorzugt OH-funktionelle Verbindungen verwendet werden. Dabei kann es sich insbesondere um Polyole handeln. Ganz besonders bevorzugt können als isocyanatreaktive Verbindung A2) die weiter unten beschriebenen Polyole der Komponente B) verwendet werden.

Es ist ebenfalls möglich, als isocyanatreaktive Verbindungen A2) Amine einzusetzen. Beispiele geeigneter Amine sind Ethylendiamin, Diethylentriamin, Triethylentetramin, Propylendiamin, Diaminocyclohexan, Diaminobenzol, Diaminobisphenyl, difunktionelle Polyamine wie z.B. die Jeffamine®, aminterminierte Polymere, insbesondere mit zahlenmittleren Molmassen bis 10000 g/Mol. Mischungen der vorgenannten Amine können ebenfalls verwendet werden.

Bevorzugt ist auch, wenn die isocyanatreaktiven Verbindungen A2) eine zahlenmittlere Molmasse von ≥ 200 und ≤ 10000 g/Mol, weiter bevorzugt ≥ 500 und ≤ 8500 g/Mol und ganz besonders bevorzugt ≥ 1000 und ≤ 8200 g/Mol aufweisen.

Die Prepolymere der Polyisocyanat-Komponente A) können insbesondere einen Restgehalt an freiem monomerem Isocyanat < 1 Gew.-%, besonders bevorzugt <0,5 Gew.-% und ganz besonders bevorzugt < 0,2 Gew.-% aufweisen.

Die Polyisocyanat-Komponente A) kann auch Mischungen der vorgenannten Polyisocyanate und Prepolymere umfassen.

Es ist gegebenenfalls auch möglich, dass die Polyisocyanat-Komponente A) anteilsmäßig Polyisocyanate enthält, die teilweise mit isocyanat-reaktiven, ethylenisch ungesättigten Verbindungen umgesetzt sind. Bevorzugt werden hierbei als isocyanat-reaktive, ethylenisch ungesättigte Verbindungen $\alpha,\beta$-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt. Besonders bevorzugt sind Acrylate und Methacrylate mit mindestens einer isocyanatreaktiven Gruppe.

Der Anteil der Polyisocyanate in der Polyisocyanat-Komponente A), der teilweise mit isocyanat-reaktiven, ethylenisch ungesättigten Verbindungen umgesetzt ist, kann 0 bis 99 Gew.-%, bevorzugt 0 bis 50 Gew.-%, besonders bevorzugt 0 bis 25 Gew.-% und ganz besonders bevorzugt 0 bis 15 Gew.-% betragen.

Es ist gegebenenfalls auch möglich, dass die Polyisocyanat-Komponente A) vollständig oder anteilsmäßig Polyisocyanate enthält, die ganz oder teilweise mit aus der Beschichtungstechnologie bekannten Blockierungsmitteln umgesetzt sind. Beispiel für Blockierungsmittel sind Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, $\varepsilon$-Caprolactam, N-tert.-Butyl-benzylamin, Cyclopentanoncarboxyethylester oder deren Mischungen.

Besonders bevorzugt ist, wenn die Polyisocyanat-Komponente A) ein aliphatisches Polyisocyanat oder ein aliphatisches Prepolymer und bevorzugt ein aliphatisches Polyisocyanat oder aliphatisches Prepolymer mit primären NCO-Gruppen umfasst oder daraus besteht.

Die isocyanatreaktive Komponente B) umfasst wenigstens eine organische Verbindung, die wenigstens zwei isocyanatreaktive Gruppen aufweist (isocyanatreaktive Verbindung). Im Rahmen der vorliegenden Erfindung werden als isocyanatreaktive Gruppen Hydroxy-, Amino- oder Thiogruppen angesehen. Bevorzugt werden als isocyanatreaktive Gruppen Hydroxy- und Aminogruppen und besonders bevorzugt werden als isocyanatreaktive Gruppen Hydroxygruppen verwendet.

Als isocyanatreaktive Komponente können alle Systeme eingesetzt werden, die im Mittel wenigstens 1,5 und bevorzugt 2 bis 3 isocyanatreaktive Gruppen aufweisen.

Geeignete isocyanatreaktive Verbindungen sind beispielsweise Polyester-, Polyether-, Polycarbonat-, Poly(meth)acrylat- und / oder Polyurethanpolyole.

Besonders geeignete Polyesterpolyole sind beispielsweise lineare oder verzweigte Polyesterpolyole, die aus aliphatischen, cycloaliphatischen oder aromatischen Di- bzw. Polycarbonsäuren bzw. ihren Anhydriden durch Umsetzung mit mehrwertigen Alkoholen einer OH-Funktionalität ≥ 2 erhältlich sind.

Die Polyesterpolyole können auch auf natürlichen Rohstoffen wie Rizinusöl basieren. Ebenfalls möglich ist, dass die Polyesterpolyole auf Homo- oder Mischpolymerisaten von Lactonen basieren. Diese können bevorzugt durch Anlagerung von Lactonen bzw. Lactongemischen wie Butyrolacton, $\varepsilon$-Caprolacton und / oder Methyl-$\varepsilon$-caprolacton an hydroxyfunktionelle Verbindungen wie mehrwertige Alkohole einer OH-Funktionalität ≥ 2, beispielsweise der vorstehend genannten Art, erhalten werden.

Die Polyesterpolyole haben bevorzugt zahlenmittlere Molmassen von ≥ 400 und ≤ 4000 g/Mol, besonders bevorzugt von ≥ 500 und ≤ 2000 g/Mol.

Die OH-Funktionalität der Polyesterpolyole beträgt bevorzugt 1,5 bis 3,5, besonders bevorzugt 1,8 bis 3,0.

Beispiele zur Herstellung der Polyester besonders geeigneter Di- bzw. Polycarbonsäuren bzw. Anhydride sind Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride wie o-Phthal-, Trimellit- oder Bernsteinsäureanhydrid oder Mischungen daraus..

Besonders zur Herstellung der Polyester geeignete Alkohole sind beispielsweise Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolpropan, Glycerin oder Mischungen daraus.

Geeignete Polycarbonatpolyole sind in an sich bekannter Weise durch Umsetzung von organischen Carbonaten oder Phosgen mit Diolen oder Diol-Mischungen zugänglich.

Hierfür geeignete organische Carbonate sind beispielsweise Dimethyl-, Diethyl- und Diphenylcarbonat.

Geeignete mehrwertige Alkohole umfassen die oben im Rahmen der Diskussion der Polyesterpolyole genannten mehrwertigen Alkoholen einer OH-Funktionalität ≥ 2. Bevorzugt können 1,4-Butandiol, 1,6-Hexandiol und / oder 3-Methylpentandiol eingesetzt werden.

Polyesterpolyole können auch zu Polycarbonatpolyolen umgearbeitet werden. Besonders bevorzugt werden bei der Umsetzung der genannten Alkohole zu Polycarbonatpolyolen Dimethyl- oder Diethylcarbonat eingesetzt.

Die Polycarbonatpolyole haben bevorzugt zahlenmittlere Molmassen von ≥ 400 und ≤ 4000 g/Mol, besonders bevorzugt von ≥ 500 und ≤ 2000 g/Mol.

Die OH-Funktionalität der Polycarbonatpolyole beträgt bevorzugt 1,8 bis 3,2, besonders bevorzugt 1,9 bis 3,0.

Geeignete Polyetherpolyole sind gegebenenfalls blockweise aufgebaute Polyadditionsprodukte cyclischer Ether an OH- oder NH-funktionelle Startermoleküle. Geeignete cyclische Ether sind beispielsweise Styroloxide, Ethylenoxid, Propylenoxid, Tetrahydrofuran, Butylenoxid, Epichlorhydrin, sowie deren beliebige Mischungen. Als Startermoleküle können die oben im Rahmen der Diskussion der Polyesterpolyole genannten mehrwertigen Alkohole einer OH-Funktionalität ≥ 2 sowie primäre oder sekundäre Amine und Aminoalkohole verwendet werden.

Bevorzugte Polyetherpolyole sind solche der vorgenannten Art, die ausschließlich auf Propylenoxid basieren. Bevorzugt sind ebenfalls Polyetherpolyole der vorgenannten Art, die statistische Copolymere oder Block-Copolymere, basierend auf Propylenoxid mit weiteren 1-Alkylenoxiden, sind, wobei der 1-Alykenoxidanteil insbesondere nicht höher als 80 Gew.-% ist. Ganz besonders bevorzugt sind Propylenoxid-Homopolymere sowie statistische Copolymere oder Block-Copolymere, die Oxyethylen-, Oxypropylen- und / oder Oxybutyleneinheiten aufweisen, wobei der Anteil der Oxypropyleneinheiten bezogen auf die Gesamtmenge aller Oxyethylen-, Oxypropylen- und Oxybutyleneinheiten insbesondere ≥ 20 Gew.-%, bevorzugt ≥ 45 Gew.-% ist. Oxypropylen- und Oxybutylen umfasst hierbei alle linearen und verzweigten C3- und C4-Isomere.

Die Polyetherpolyole haben bevorzugt zahlenmittlere Molmassen von ≥ 250 und ≤ 10000 g/Mol, besonders bevorzugt von ≥ 500 und ≤ 8500 g/Mol und ganz besonders bevorzugt von ≥ 600 und ≤ 4500 g/Mol. Ihre OH-Funktionalität beträgt bevorzugt 1,5 bis 4,0 und besonders bevorzugt 1,8 bis 3,1.

Weitere bevorzugte Polyetherpolyole bestehen aus einer isocyanatreaktiven Komponente umfassend hydroxyfunktionelle Multiblockcopolymere des Typs $Y(X_i\text{-}H)_n$ mit i = 1 bis 10 und n = 2 bis 8, wobei die Segmente $X_i$ jeweils aus Oxyalkyleneinheiten der Formel (I)

$$-CH_2\text{-}CH(R)\text{-}O- \qquad (I)$$

aufgebaut sind, in der R ein Alkyl- oder ein Arylrest, ist, der auch substituiert oder durch Heteroatome (wie Ethersauerstoffe) unterbrochen sein kann oder Wasserstoff und Y der zugrundeliegende Starter ist.

Der Rest R kann bevorzugt ein Wasserstoff-, Methyl-, Butyl-, Hexyl-, Octyl- oder ein ethergruppenhaltiger Alkylrest sein. Bevorzugte ethergruppenhaltiger Alkylreste basieren auf Oxyalkyleneinheiten.

Bevorzugt ist n eine ganze Zahl von 2 bis 6, besonders bevorzugt 2 oder 3 und ganz besonders bevorzugt gleich 2.

Bevorzugt ist ebenfalls, wenn i eine ganze Zahl von 1 bis 6, besonders bevorzugt von 1 bis 3 und ganz besonders bevorzugt gleich 1 ist.

Weiter bevorzugt ist, wenn der Anteil der Segmente $X_i$, bezogen auf die Gesamtmenge der Segmente Xi und Y, > 50 Gew.-% und bevorzugt ≥ 66 Gew.-% ist.

Bevorzugt ist auch, wenn der Anteil der Segmente Y, bezogen auf die Gesamtmenge der Segmente $X_i$ und Y, < 50 Gew.-% und bevorzugt < 34 Gew.% ist.

Die Multiblockcopolymere $Y(X_i\text{-}H)_n$ haben bevorzugt zahlenmittlere Molekulargewichte von > 1200 g/Mol, besonders bevorzugt > 1950 g/Mol, jedoch bevorzugt < 12000 g/Mol, besonders bevorzugt < 8000 g/Mol.

Die Blöcke $X_i$ können Homopolymere sein, die ausschließlich aus gleichen Oxyalkylen-Wiederholungseinheiten bestehen. Sie können auch statistisch aus verschiedenen Oxyalkyleneinheiten oder ihrerseits blockweise aus verschiedenen Oxyalkyleneinheiten aufgebaut sein.

Bevorzugte basieren die Segmente $X_i$ ausschließlich auf Propylenoxid oder statistischen oder blockweisen Mischungen von Propylenoxid mit weiteren 1-Alkylenoxiden, wobei der Anteil an weiteren 1-Alykenoxiden bevorzugt nicht > 80 Gew.-% ist.

Besonders bevorzugte Segmente $X_i$ sind Propylenoxid-Homopolymere sowie statistische Copolymere oder

Block-Copolymere, die Oxyethylen- und / oder Oxypropyleneinheiten aufweisen. Ganz besonders bevorzugt beträgt in diesem Fall der Anteil der Oxypropyleneinheiten, bezogen auf die Gesamtmenge aller Oxyethylen- und Oxypropyleneinheiten, ≥ 20 Gew.-% und noch weiter bevorzugt ≥ 40 Gew.-%.

Die Blöcke $X_i$ können durch ringöffnende Polymerisation der vorstehend beschriebenen Alkylenoxide auf einen n-fach hydroxy- oder aminofunktionellen Starter $Y(H)_n$ aufaddiert werden.

Der Starter $Y(H)_n$ kann aus di- und / oder höher hydroxyfunktionellen Polymerstrukturen auf Basis cyclischer Ether oder aus di- und / oder höher hydroxyfunktionellen Polycarbonat-, Polyester-, Poly(meth)acrylat-, Epoxydharz- und / oder Polyurethanstruktureinheiten oder entsprechenden Hybriden bestehen.

Beispiele für geeignete Starter $Y(H)_n$ sind die oben genannten Polyester-, Polycarbonat- und Polyetherpolyole.

Die Polyesterpolyole haben bevorzugt zahlenmittlere Molmassen von 200 bis 2000 g/Mol, besonders bevorzugt von 400 bis 1400 g/Mol.

Die Polycarbonatpolyole haben bevorzugt zahlenmittlere Molmassen von 400 bis 2000 g/Mol, besonders bevorzugt von 500 bis 1400 g/Mol und ganz besonders bevorzugt von 650 bis 1000 g/Mol.

Die Polyetherpolyole haben bevorzugt zahlenmittlere Molmassen von 200 bis 2000 g/Mol, besonders bevorzugt von 400 bis 1400 g/Mol und ganz besonders bevorzugt von 650 bis 1000 g/Mol.

Besonders bevorzugte Starter $Y(H)_n$ sind insbesondere difunktionelle Polymere des Tetrahydrofuran, insbesondere difunktionelle aliphatische Polycarbonatpolyole und Polyesterpolyole sowie Polymere des ε-Caprolacton insbesondere mit zahlenmittleren Molmassen < 3100 g/Mol, bevorzugt ≥ 500 g/mol und ≤ 2100 g/mol.

Weitere Beispiele geeigneter Polyether und Verfahren zu deren Herstellung sind in der EP 2 172 503 A1 beschrieben, auf deren diesbezügliche Offenbarung hiermit Bezug genommen wird.

Bei einer weiteren bevorzugten Ausführungsform ist vorgesehen, dass das Schreibmonomer C) wenigstens ein mono- und / oder ein multifunktionales Schreibmonomer umfasst, wobei es sich insbesondere um mono- und multifunktionelle Acrylat-Schreibmonomere handeln kann. Besonders bevorzugt kann das Schreibmonomer wenigstens ein monofunktionelles und ein multifunktionelles Urethan(meth)acrylat umfassen.

Bei den Acrylat-Schreibmonomeren kann es sich insbesondere um Verbindungen der allgemeinen Formel (II)

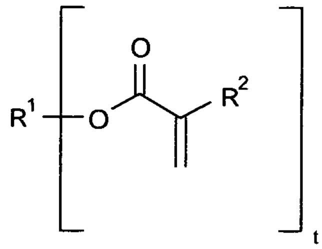

(II)

handeln, bei denen n≥1 und n≤4 ist und $R^1$, $R^2$ unabhängig voneinander Wasserstoff, lineare, verzweigte, cyclische oder heterocyclische unsubstituierte oder gegebenenfalls auch mit Heteroatomen substituierte organische Reste sind. Besonders bevorzugt ist $R^2$ Wasserstoff oder Methyl und/oder $R^1$ ein linearer, verzweigter, cyclischer oder heterocyclischer unsubstituierter oder gegebenenfalls auch mit Heteroatomen substituierter organischer Rest.

Ebenso ist es möglich, dass weitere ungesättigte Verbindungen wie α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen sowie olefinisch ungesättigte Verbindungen wie z.B. Styrol, α-Methylstyrol, Vinyltoluol, Olefinine, wie z.B. 1-Octen und/oder 1-Decen, Vinylestern, (Meth)acrylnitril, (Meth)acrylamid, Methacrylsäure, Acrylsäure zugesetzt werden. Bevorzugt sind aber Acrylate und Methacrylate.

Als Acrylate bzw. Methacrylate werden allgemein Ester der Acrylsäure bzw. Methacrylsäure bezeichnet. Beispiele verwendbarer Acrylate und Methacrylate sind Methylacrylat, Methylmethacrylat, Ethylacrylat, Ethylmethacrylat, Ethoxyethylacrylat, Ethoxyethylmethacrylat, n-Butylacrylat, n-Butylmethacrylat, tert.-Butylacrylat, tert.-Butylmethacrylat, Hexylacrylat, Hexylmethacrylat, 2-Ethylhexylacrylat, 2-Ethylhexylmethacrylat, Butoxyethylacrylat, Butoxyethylmethacrylat, Laurylacrylat, Laurylmethacrylat, Isobornylacrylat, Isobornylmethacrylat, Phenylacrylat, Phenylmethacrylat, p-Chlorphenylacrylat, p-Chlorphenylmethacrylat, p-Bromphenylacrylat, p-Bromphenyl-methacrylat, 2,4,6-Trichlorphenylacrylat, 2,4,6-Trichlorphenylmethacrylat, 2,4,6-Tribromphenyl-acrylat, 2,4,6-Tribromphenylmethacrylat, Pentachlorohenylacrylat, Pentachlorphenylmethacrylat, Pentabromphenylacrylat, Pentabromphenylmethacrylat, Pentabrombenzylacrylat, Pentabrombenzylmethacrylat, Phenoxyethylacrylat, Phenoxyethylmethacrylat, Phenoxyethoxyethylacrylat, Phenoxyethoxyethylmethacrylat, Phenylthioethylacrylat, Phenylthioethylmethacrylat, 2-Naphthylacrylat, 2-Naphthylmethacrylat, 1,4-Bis-(2-thionaphthyl)-2-butylacrylat, 1,4-Bis-(2-thionaphthyl)-2-butylmethacrylat, Propan-2,2-diylbis[(2,6-dibrom-4,1-phenylen)oxy(2-{[3,3,3-tris(4-chlorphenyl)-propanoyl]-oxy}propan-3,1-diyl)oxyethan-2,1-diyl]-diacrylat, Bisphenol A Diacrylat, Bisphenol A Dimethacrylat, Tetrabromobisphenol A Diacrylat, Tetrabromobisphenol A Dimethacrylat sowie deren ethoxylierte Analogverbindungen, N-Carbazolylacrylate, um nur eine Auswahl verwendbarer Acrylate und Methacrylate zu nennen.

Selbstverständlich können auch weitere Urethanacrylate verwendet werden. Unter Urethanacrylaten versteht man Verbindungen mit mindestens einer Acrylsäureestergruppe, die zusätzlich über mindestens eine Urethanbindung verfügen. Es ist bekannt, dass solche Verbindungen durch Umsetzung eines Hydroxy-funktionellen Acrylsäureesters mit einer Isocyanat-funktionellen Verbindung erhalten werden können.

Beispiele hiefür verwendbarer Isocyanat-funktionelle Verbindungen sind aromatische, araliphatische, aliphatische und cycloaliphatische Di-, Tri- oder Polyisocyanate. Es können auch Mischungen solcher Di-, Tri- oder Polyisocyanate eingesetzt werden. Beispiele geeigneter Di-, Tri- oder Polyisocyanate sind Butylendiisocyanat, Hexamethylendiisocyanat (HDI), Isophorondiisocyanat (IPDI), 1,8-Diisocyanato-4-(isocyanatomethyl)octan, 2,2,4- und/oder 2,4,4-Trimethylhexamethylendiisocyanat, die isomeren Bis(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, 1,5-Naphthylendiisocyanat, m-Methylthiophenylisocyanat, Triphenylmethan-4,4',4"-triisocyanat und Tris(p-isocyanatophenyl)thiophosphat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind dabei aromatische oder araliphatische Di-, Tri- oder Polyisocyanate.

Als hydroxyfunktionelle Acrylate oder Methacrylate für die Herstellung von Urethanacrylaten kommen beispielsweise Verbindungen in Betracht wie 2-Hydroxyethyl(meth)acrylat, Polyethylenoxidmono(meth)acrylate, Polypropylenoxidmono(meth)acrylate, Polyalkylenoxidmono(meth)-acrylate, Poly(ε-caprolacton)mono(meth)acrylate, wie z.B. Tone® M100 (Dow, Schwalbach, DE), 2-Hydroxypropyl(meth)acrylat, 4-Hydroxybutyl(meth)acrylat, 3-Hydroxy-2,2-dimethylpropyl-(meth)acrylat, Hydroxypropyl(meth)acrylat, Acrylsäure-(2-hydroxy-3-phenoxypropylester), die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Bevorzugt sind 2-Hydroxyethylacrylat, Hydroxypropylacrylat, 4-Hydroxybutylacrylat und Poly(ε-caprolacton)mono(meth)acrylate. Darüber hinaus sind als isocyanat-reaktive oligomere oder polymere ungesättigte Acrylat- und/oder Methacrylatgruppen enthaltende Verbindungen alleine oder in Kombination mit den vorgenannten monomeren Verbindungen geeignet. Ebenfalls verwendet werden können die an sich bekannten hydroxylgruppenhaltigen Epoxy(meth)acrylate mit OH-Gehalten von 20 bis 300 mg KOH/g oder hydroxylgruppenhaltige Polyurethan(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten.

Bevorzugt sind insbesondere Urethanacrylate erhältlich aus der Umsetzung von Tris(p-isocyanatophenyl)thiophosphat und m-Methylthiophenylisocyanat mit alkoholfunktionellen Acrylaten wie Hydroxyethyl(meth)acrylat, Hydroxypropyl(meth)acrylat und Hydroxybutyl(meth)acrylat.

Besonders bevorzugt ist eine Kombination aus Komponenten A) und B) bestehend aus Additionsprodukten von Butyrolacton, e-Caprolacton und/oder Methyl-ε-caprolacton an Polyetherpolyolen einer Funktionalität von 1,8 bis 3,1 mit zahlenmittleren Molmassen von 200 bis 4000 g/mol in Verbindung mit Isocyanuraten, Uretdionen, Iminooxadiazindionen und/oder anderen Oligomeren basierend auf HDI. Ganz besonders bevorzugt sind Additionsprodukte von e-Caprolacton an Poly(tetrahydrofurane) mit einer Funktionalität von 1,9 bis 2,2 und zahlenmittleren Molmassen von 500 bis 2000 g/mol (insbesondere 600 bis 1400 g/mol), deren zahlenmittlere Gesamtmolmasse von 800 bis 4500 g/Mol, insbesondere von 1000 bis 3000 g/Mol liegt in Verbindung mit Oligomeren, Isocyanuraten und/oder Iminooxadiazindionen basierend auf HDI.

Gemäß einer weiteren bevorzugten Ausführungsform ist vorgesehen, dass die Photopolymer-Formulierung zusätzlich Urethane als Additive enthält, wobei die Urethane insbesondere mit wenigstens einem Fluoratom substituiert sein können.

Bevorzugt können die Urethane die allgemeine Formel (III)

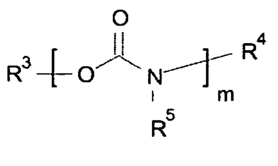

(III)

haben, in der m≥1 und m≤8 ist und $R^3$, $R^4$, $R^5$ unabhängig voneinander Wasserstoff, lineare, verzweigte, cyclische oder heterocyclische unsubstituierte oder gegebenenfalls auch mit Heteroatomen substituierte organische Reste sind, wobei bevorzugt mindestens einer der Reste $R^3$, $R^4$, $R^5$ mit wenigstens einem Fluoratom substituiert ist und besonders bevorzugt $R^3$ ein organischer Rest mit mindestens einem Fluoratom ist. Besonders bevorzugt ist $R^4$ ein linearer, verzweigter, cyclischer oder heterocyclischer unsubstituierter oder gegebenenfalls auch mit Heteroatomen wie beispielsweise Fluor substituierter organischer Rest.

Die eingesetzten Photoinitiatoren D) sind üblicherweise durch aktinische Strahlung aktivierbare Verbindungen, die eine Polymerisation der entsprechender Gruppen auslösen können.

Bei den Photoinitiatoren kann zwischen unimolekularen (Typ I) und bimolekularen (Typ II) Initiatoren unterschieden werden. Desweiteren werden sie je nach ihrer chemischen Natur in Photoinitiatoren für radikalische, anionische, kationische oder gemischte Art der Polymerisation unterschieden.

Typ 1-Photoinitiatoren (Norrish-Typ-I) für die radikalische Photopolymerisation bilden beim Bestrahlen durch eine unimolekulare Bindungsspaltung freie Radikale.

Beispiele für Typ 1-Photoinitiatoren sind Triazine, wie z. B. Tris(trichlormethyl)triazin, Oxime, Benzoinether, Benzilketale, alpha-alpha-Dialkoxyacetophenon, Phenylglyoxylsäureester, Bis-imidazole, Aroylphosphinoxide, z.B. 2,4,6-Trimethyl-benzoyl-diphenylphosphinoxid, Sulfonium- und Iodoniumsalze.

Typ II-Photoinitiatoren (Norrish-Typ-II) für die radikalische Polymerisation durchlaufen bei der Bestrahlung eine bimolekulare Reaktion, wobei der Photoinitiator im angeregten Zustand mit einem zweiten Molekül, dem Coinitiator, reagiert und durch Elektronen- oder Protonentransfer oder direkte Wasserstoffabstraktion die polymerisationsauslösenden Radikale bildet.

Beispiele für Typ-II- Photoinitiatoren sind Chinone, wie z. B. Campherchinon, aromatische Ketoverbindungen, wie z. B. Benzophenone in Kombination mit tertiären Aminen, Alkylbenzophenone, halogenierte Benzophenone, 4,4'-Bis(dimethylamino)benzophenon (Michlers Keton), Anthron, , Methyl-p-(dimethylamino)benzoat, Thioxanthon, Ketocoumarine, alpha-Aminoalkylphenon, alpha-Hydroxyalkylphenon und kationische Farbstoffe, wie z. B. Methylenblau, in Kombination mit tertiären Aminen.

Für den UV- und kurzwelligen sichtbaren Bereich werden Typ-I- und Typ-II-Photoinitiatoren eingesetzt, für den längerwelligen sichtbaren Lichtbereich kommen überwiegend Typ-II- Photoinitiatoren zum Einsatz.

Auch die in der EP 0 223 587 A beschriebenen Photoinitiatorsysteme, bestehend aus einer Mischung aus einem Ammoniumalkylarylborat und einem oder mehreren Farbstoffen, können als Photoinitiator vom Typ II für die radikalische Polymerisation eingesetzt werden. Als Ammoniumalkylarylborat eignen sich beispielsweise Tetrabutylammonium Triphenylhexylborat, Tetrabutylammonium Triphenylbutylborat, Tetrabutylammonium Trinapthylhexylborat, Tetrabutylammonium Tris(4-tert.butyl)-phenylbutylborat, Tetrabutylammonium Tris-(3-fluorphenyl)-hexylborat, Tetramethylammonium Triphenylbenzylborat, Tetra(n-hexyl)ammonium (sec-Butyl)triphenylborat, 1-Methyl-3-octylimidazolium Dipentyldiphenylborat und Tetrabutylammonium Tris-(3-chlor-4-methylphenyl)-hexylborat (Cunningham et al., RadTech'98 North America UV/EB Conference Proceedings, Chicago, Apr. 19-22, 1998).

Die für die anionische Polymerisation verwendeten Photoinitiatoren sind in der Regel Typ 1-Systeme und leiten sich von Übergangsmetall-Komplexen der ersten Reihe ab. Hier sind beispielsweise ChromSalze, wie z.B. trans-$Cr(NH_3)_2(NCS)_4^-$ (Kutal et al, Macromolecules 1991, 24, 6872) oder Ferrocenyl-Verbindungen (Yamaguchi et al. Macromolecules 2000, 33, 1152) zu nennen.

Eine weitere Möglichkeit der anionischen Polymerisation besteht in der Verwendung von Farbstoffen, wie Kristallviolett Leukonitril oder Malachitgrün Leukonitril, die durch photolytischen Zerfall Cyanoacrylate polymerisieren können (Neckers et al. Macromolecules 2000, 33, 7761). Dabei wird das Chromophor in die Polymere eingebaut, so dass die resultierenden Polymere durchgefärbt sind.

Die für die kationische Polymerisation verwendbaren Photoinitiatoren bestehen im Wesentlichen aus drei Klassen: Aryldiazonium-Salze, Onium-Salze (hier speziell: Iodonium-, Sulfonium- und Selenonium-Salze) sowie Organometall-Verbindungen. Phenyldiazonium-Salze können unter Bestrahlung sowohl in Gegenwart als auch bei Abwesenheit eines Wasserstoff-Donors ein Kation erzeugen, das die Polymerisation initiiert. Die Effizienz des Gesamtsystems wird durch die Natur des verwendeten Gegenions zur Diazonium-Verbindung bestimmt. Bevorzugt sind hier die wenig reaktiven, aber recht teuren $SbF_6^-$, $AsF_6^-$ oder $PF_6^-$. Für den Einsatz in Beschichtung dünner Filme sind diese Verbindungen in der Regel weniger geeignet, da durch den nach der Belichtung freigesetzten Stickstoff die Oberflächengüte herabgesetzt wird (pinholes) (Li et al., Polymeric Materials Science and Engineering, 2001, 84, 139).

Sehr weit verbreitet und auch in vielerlei Form kommerziell erhältlich sind Onium-Salze, speziell Sulfonium- und Iodonium-Salze. Die Photochemie dieser Verbindungen ist nachhaltig untersucht worden. Die Iodonium-Salze zerfallen nach der Anregung zunächst homolytisch und erzeugen somit ein Radikal und ein Radikalkation, welches zunächst durch H-Abstraktion in ein Kation übergeht, das schließlich ein Proton freisetzt und dadurch die kationische Polymerisation startet (Dektar et al. J. Org. Chem. 1990, 55, 639; J. Org. Chem., 1991, 56. 1838). Dieser Mechanismus ermöglicht den Einsatz von Iodonium-Salzen ebenfalls für die radikalische Photopolymerisation. Hierbei kommt der Wahl des Gegenions erneut eine große Bedeutung zu. Bevorzugt werden ebenfalls $SbF_6^-$, $AsF_6^-$ oder $PF_6^-$ verwendet. An-

sonsten ist in dieser Strukturklasse die Wahl der Substitution des Aromaten recht frei und im Wesentlichen durch die Verfügbarkeit geeigneter Startbausteine für die Synthese bestimmt. Bei den Sulfonium-Salzen handelt es sich um Verbindungen, die nach Norrish-Typ II zerfallen (Crivello et al., Macromolecules, 2000, 33, 825). Auch bei den Sulfonium-Salzen kommt der Wahl des Gegenions eine kritische Bedeutung zu, die sich im Wesentlichen in der Härtungsgeschwindigkeit der Polymere äußert. Die besten Ergebnisse werden in der Regel mit $SbF_6^-$ Salzen erzielt.

Da die Eigenabsorption von Iodonium- und Sulfonium-Salze bei < 300 nm liegt, sollten diese Verbindungen für die Photopolymerisation mit nahem UV oder kurzwelligem sichtbarem Licht entsprechend sensibilisiert werden. Dies gelingt durch die Verwendung von längerwellig absorbierenden Aromaten wie z.B. Anthracen und Derivaten (Gu et al., Am. Chem. Soc. Polymer Preprints, 2000, 41 (2), 1266) oder Phenothiazin bzw. dessen Derivaten (Hua et al, Macromolecules 2001, 34, 2488-2494).

Es kann vorteilhaft sein, Gemische dieser Sensibilisatoren oder auch Photoinitiatoren einzusetzen. Je nach verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Bevorzugte Photoinitiatoren sind Mischungen aus Tetrabutylammonium Tetrahexylborat, Tetrabutylammonium Triphenylhexylborat, Tetrabutylammonium Triphenylbutylborat, Tetrabutylammonium Tris-(3-fluorphenyl)-hexylborat ([191726-69-9], CGI 7460, Produkt der BASF SE, Basel, Schweiz) und Tetrabutylammonium Tris-(3-Chlor-4-methylphenyl)-hexylborat ([1147315-11-4], CGI 909, Produkt der BASF SE, Basel, Schweiz) mit kationischen Farbstoffen, wie sie beispielsweise in H. Berneth in Ullmann's Encyclopedia of Industrial Chemistry, Cationic Dyes, Wiley-VCH Verlag, 2008 beschrieben sind.

Beispiele für kationische Farbstoffe sind Astrazon Orange G, Basic Blue 3, Basic Orange 22, Basic Red 13, Basic Violett 7, Methylenblau, Neu Methylenblau, Azur A, Pyrillium I, Safranin O, Cyanin, Gallocyanin, Brilliant Grün, Kristallviolett, Ethylviolett und Thionin.

Besonders bevorzugt ist, wenn die erfindungsgemäße Photopolymer-Formulierung einen kationischen Farbstoff der Formel $F^+An^-$ enthält.

Unter kationischen Farbstoffen der Formel $F^+$ werden bevorzugt solche der folgenden Klassen verstanden: Acridin-Farbstoffe, Xanthen-Farbstoffe, Thioxanthen-Farbstoffe, Phenazin-Farbstoffe, Phenoxazin-Farbstoffe, Phenothiazin-Farbstoffe, Tri(het)arylmethan-Farbstoffe - insbesondere Diamino-und Triamino(het)arylmethan-Farbstoffe, Mono-, Di- und Trimethincyanin-Farbstoffe, Hemicyanin-Farbstoffe, extern kationische Merocyanin-Farbstoffe, extern kationische Neutrocyanin-Farbstoffe, Nullmethin-Farbstoffe - insbesondere Naphtholactam-Farbstoffe, Streptocyanin-Farbstoffe. Solche Farbstoffe sind beispielsweise in H. Berneth in Ullmann's Encyclopedia of Industrial Chemistry, Azine Dyes, Wiley-VCH Verlag, 2008, H. Berneth in Ullmann's Encyclopedia of Industrial Chemistry, Methine Dyes and Pigments, Wiley-VCH Verlag, 2008, T. Gessner, U. Mayer in Ullmann's Encyclopedia of Industrial Chemistry, Triarylmethane and Diarylmethane Dyes, Wiley-VCH Verlag, 2000 beschrieben.

Mit $An^-$ ist ein Anion gemeint. Bevorzugte Anionen $An^-$ sind insbesondere $C_8$- bis $C_{25}$-Alkansulfonat, vorzugsweise $C_{13}$- bis $C_{25}$-Alkansulfonat, $C_3$- bis $C_{18}$-Perfluoralkansulfonat, $C_4$- bis $C_{18}$-Perfluoralkansulfonat, das in der Alkylkette mindestens 3 Wasserstoffatome trägt, $C_9$- bis $C_{25}$-Alkanoat, $C_9$- bis $C_{25}$-Alkenoat, $C_8$- bis $C_{25}$-Alkylsulfat, vorzugsweise $C_{13}$- bis $C_{25}$-Alkylsulfat, $C_8$- bis $C_{25}$-Alkenylsulfat, vorzugsweise $C_{13}$- bis $C_{25}$-Alkenylsulfat, $C_3$- bis $C_{18}$-Perfluoralkylsulfat, $C_4$- bis $C_{18}$-Perfluoralkylsulfat, das in der Alkylkette mindestens 3 Wasserstoffatome trägt, Polyethersulfate basierend auf mindestens 4 Äquivalenten Ethylenoxid und/oder Äquivalenten 4 Propylenoxid, Bis-$C_4$-bis $C_{25}$-Alkyl-, $C_5$-bis $C_7$-Cycloalkyl-, $C_3$- bis $C_8$-Alkenyl- oder $C_7$- bis $C_{11}$-Aralkyl-sulfosuccinat, durch mindestens 8 Fluoratome substituiertes Bis-$C_2$- bis $C_{10}$-alkyl-sulfosuccinat, $C_8$- bis $C_{25}$-Alkyl-sulfoacetate, durch mindestens einen Rest der Gruppe Halogen, $C_4$- bis $C_{25}$-Alkyl, Perfluor-$C_1$- bis $C_8$-Alkyl und/oder $C_1$- bis $C_{12}$-Alkoxycarbonyl substituiertes Benzolsulfonat, ggf. durch Nitro, Cyano, Hydroxy, $C_1$- bis $C_{25}$-Alkyl, $C_1$- bis $C_{12}$-Alkoxy, Amino, $C_1$- bis $C_{12}$-Alkoxycarbonyl oder Chlor substituiertes Naphthalin- oder Biphenylsulfonat, ggf. durch Nitro, Cyano, Hydroxy, $C_1$- bis $C_{25}$-Alkyl, $C_1$- bis $C_{12}$-Alkoxy, $C_1$- bis $C_{12}$-Alkoxycarbonyl oder Chlor substituiertes Benzol-, Naphthalin- oder Biphenyldisulfonat, durch Dinitro, $C_6$-bis $C_{25}$-Alkyl, $C_4$- bis $C_{12}$-Alkoxycarbonyl, Benzoyl, Chlorbenzoyl oder Toluoyl substituiertes Benzoat, das Anion der Naphthalindicarbonsäure, Diphenyletherdisulfonat, sulfonierte oder sulfatierte, ggf. mindestens einfach ungesättigte $C_8$-bis $C_{25}$-Fettsäureester von aliphatischen $C_1$- bis $C_8$-Alkoholen oder Glycerin, Bis-(sulfo-$C_2$- bis $C_6$-alkyl)-$C_3$- bis $C_{12}$-alkandicarbonsäureester, Bis-(sulfo-$C_2$- bis $C_6$-alkyl)-itaconsäureester, (Sulfo-$C_2$- bis $C_6$-alkyl)-$C_6$- bis $C_{18}$-alkancarbonsäureester, (Sulfo-$C_2$- bis $C_6$-alkyl)-acryl- oder methacrylsäureester, ggf. durch bis zu 12 Halogenreste substituiertes Triscatecholphosphat, ein Anion der Gruppe Tetraphenylborat, Cyanotriphenylborat, Tetraphenoxyborat, $C_4$- bis $C_{12}$-Alkyl-triphenylborat, deren Phenyl- oder Phenoxy-Reste durch Halogen, $C_1$- bis $C_4$-Alkyl und/oder $C_1$- bis $C_4$-Alkoxy substituiert sein können, $C_4$- bis $C_{12}$-Alkyl-trinaphthylborat, Tetra-$C_1$- bis $C_{20}$-alkoxyborat, 7,8- oder 7,9-Dicarba-nido-undecaborat(1-) oder (2-), die gegebenenfalls an den B- und/oder C-Atomen durch eine oder zwei $C_1$- bis $C_{12}$-Alkyl- oder Phenyl-Gruppen substituiert sind, Dodecahydro-dicarbadodecaborat(2-) oder B-$C_1$- bis $C_{12}$-Alkyl-C-phenyl-dodecahydro-dicarbadodecaborat(1-) steht, wobei bei mehrwertigen Anionen wie Naphthalindisulfonat An- für ein Äquivalent dieses Anions steht, und wobei die Alkan- und Alkylgruppen verzweigt sein können und/oder durch Halogen, Cyano,

Methoxy, Ethoxy, Methoxycarbonyl oder Ethoxycarbonyl sustituiert sein können.

Besonders bevorzugte Anionen sind sec-$C_{11}$- bis $C_{18}$-Alkansulfonat, $C_{13}$- bis $C_{25}$-Alkylsulfat, verzweigtes $C_8$- bis $C_{25}$-Alkylsulfat, ggf. verzweigtes Bis-$C_6$- bis $C_{25}$-alkylsulfosuccinat, sec- oder tert.-$C_4$- bis $C_{25}$-Alkylbenzolsulfonat, sulfonierte oder sulfatierte, ggf. mindestens einfach ungesättigte $C_8$-bis $C_{25}$-Fettsäureester von aliphatischen $C_1$- bis $C_8$-Alkoholen oder Glycerin, Bis-(sulfo-$C_2$- bis $C_6$-alkyl)-$C_3$- bis $C_{12}$-alkandicarbonsäureester, (Sulfo-$C_2$- bis $C_6$-alkyl)-$C_6$- bis $C_{18}$-alkancarbonsäureester, durch bis zu 12 Halogenreste substituiertes Triscatecholphosphat, Cyanotriphenylborat, Tetraphenoxyborat, Butyltriphenylborat.

Bevorzugt ist auch, wenn das Anion $An^-$ des Farbstoffs einen AClogP im Bereich von 1-30, besonders bevorzugt im Bereich von 1-12 und insbesondere bevorzugt im Bereich von 1-6,5 aufweist. Der AClogP wird nach J. Comput. Aid. Mol. Des. 2005, 19, 453; Virtual Computational Chemistry Laboratory, http://www.vcclab.org berechnet.

Besonders bevorzugt sind Farbstoffe $F^+An^-$ mit einer Wasseraufnahme $\leq$5 Gew.-%.

Die Wasseraufnahme ergibt sich aus der Formel (F-1)

$$W = (m_f/m_t - 1)*100\% \quad (F\text{-}1),$$

worin $m_f$ die Masse des Farbstoffs nach Wassersättigung und $m_t$ die Masse des getrockneten Farbstoffs sind. $m_t$ wird durch Trocknen einer bestimmten Farbstoffmenge bis zur Massenkonstanz, beispielsweise bei erhöhter Temperatur im Vakuum ermittelt. $m_f$ wird durch Stehen einer bestimmten Farbstoffmenge an der Luft bei einer definierten Luftfeuchtigkeit bis zur Gewichtskonstanz bestimmt.

Ganz besonders bevorzugt ist, wenn der Photoinitiator eine Kombination von Farbstoffen, deren Absorptionsspektren zumindest teilweise den Spektralbereich von 400 bis 800 nm abdecken, mit wenigstens einem auf die Farbstoffe abgestimmten Coinitiator umfasst.

Die Schicht (P) kann bevorzugt eine Schichtdicke von 5 $\mu$m bis 100 $\mu$m, besonders bevorzugt von 5 $\mu$m bis 30 $\mu$m, ganz besonders bevorzugt von 10 $\mu$m bis 25 $\mu$m aufweisen.

Bevorzugt enthält das Fenster wenigstens eine weitere transparente Schicht enthaltend wenigstens einen thermoplastischen Kunststoff, welche sich auf der von der Schicht (O) abgewandten Seite der Schicht (P) befindet. Diese Schicht kann insbesondere die Haftung zwischen der Schicht (P) und gegebenenfalls vorhandenen äußeren Deckschichten verbessern und eine Auftrennung des erfindungsgemäßen Sicherheits- und/oder Wertdokuments ohne Zerstörung es transparenten Fensters verhindern.

Die Schicht (P) kann in bevorzugten Ausführungsformen der Erfindung auf eine Substratschicht (S) aufgebracht sein, welche als eine eben solche zusätzliche transparente Schicht in das Fenster des erfindungsgemäßen Sicherheits- und/oder Wertdokument eingearbeitet ist. Dabei handelt es sich bei der Substratschicht (S) bevorzugt um eine solche enthaltend wenigstens einen transparenten thermoplastischen Kunststoff, besonders bevorzugt wenigstens ein transparentes Poly- oder Copolycarbonat.

Die Verwendung einer Substratschicht (S) welche aus vergleichbaren thermoplastischen Kunststoffen zu der, der transparenten Aussenschichten besteht, bietet folgenden Vorteil: Nach dem Laminieren bildet die Schicht S und ein untrennbare Verbindung zu den Deckschichten, welche die Fälschungssicherheit des Dokuments noch weiter erhöht.

Bei dieser Ausführungsform befindet sich die Schicht (P) zwischen der Schicht (O) und einer Substratschicht (S), wobei die Substratschicht (S) bevorzugt einen ähnlichen oder den gleichen thermoplastischen Kunststoff enthält wie die transparente Deckschicht, die an die Substratschicht (S) angrenzt. Dabei ist unter einem ähnlichen Kunststoff ein solcher zu verstehen, der mit dem anderen Kunststoff beim laminieren einen untrennbaren, bevorzugt monolithischen Schichtverbund eingeht.

Besonders bevorzugt enthält wenigstens die an die Substratschicht (S) angrenzende transparente Deckschicht, ganz besonders bevorzugt beide transparenten Deckschichten, sowie die Substratschicht (S) wenigstens ein Poly- oder Copolycarbonat.

Das Fenster kann zudem weitere transparente Schichten aus wenigstens einen thermoplastischen Kunststoff enthalten.

In einer bevorzugten Ausführungsform enthält das Fenster wenigstens zwei weitere transparente Schichten enthaltend wenigstens einen thermoplastischen Kunststoff, von denen sich eine auf der von der Schicht O abgewandten Seite der Schicht P befindet und vorzugsweise ein TPU- Folie (K) ist und sich die andere auf der von der Schicht P abgewandten Seite der Schicht O befindet und ebenfalls eine TPU Folie (K) ist. Die Funktion der TPU Folien ist die Haftung zwischen den Deckschichten D und der Schicht P, bzw. der Schicht O zu erhöhen. (Figur 6)

Vorzugsweise handelt es sich bei den Deckschichten enthaltend wenigstens einen thermoplastischen Kunststoff sowie bei den weiteren transparenten Schichten enthaltend wenigstens einen thermoplastischen Kunststoff im Mehrschichtverbund des Fensters um solche enthaltend wenigstens ein Poly- oder Copolycarbonat.

Bevorzugt handelt es sich bei dem erfindungsgemäßen Sicherheits- und/oder Wertdokument um ein Identifikationsdokument, bevorzugt eine Identifikationskarte (ID-Karte), wie z.B. einen Personalausweis, Reisepass, Führerschein, eine Bankkarte, Kreditkarte, Versicherungskarte, sonstige Ausweiskarte etc..

Das erfindungsgemäße Sicherheits- und/oder Wertdokument kann bevorzugt eine Gesamtdicke von 150 $\mu$m bis 1500 $\mu$m, besonders bevorzugt von 500 $\mu$m bis 1000 $\mu$m aufweisen.

Dabei kann das erfindungsgemäße Sicherheits- und/oder Wertdokument zusätzlich zu den vorangehend genannten Schichten weitere thermoplastische Kunststoffschichten, bevorzugt Schichten enthaltend wenigstens ein Poly- oder Copolycarbonat aufweisen.

Die erfindungsgemäßen Sicherheits- und/oder Wertdokumente lassen sich auf einfach Weise herstellen, indem mittels Lamination eines entsprechenden Schichtstapels der Mehrschichtverbund gebildet wird.

Weiterhin Gegenstand der vorliegenden Erfindung ist daher ein Verfahren zur Herstellung eines erfindungsgemäßen Sicherheits- und/oder Wertdokumentes, dadurch gekennzeichnet, dass

a) in einen ein- oder mehrschichtigen Grundkörper für ein Sicherheits- und/oder Wertdokument eine Aussparung eingebracht wird

b) in die Aussparung ein entsprechend der Aussparung zugeschnittener Mehrschichtverbund enthaltend

o wenigstens eine Schicht (P) enthaltend wenigstens ein Photopolymer, in die wenigstens ein Hologramm (H) eingebracht ist, und

o wenigstens eine transparente optisch schaltbare Schicht (O), welche durch Wärme oder Bestrahlung nichttransparent wird,

eingebracht wird,

c) die gemäß b) erhaltene Anordnung zwischen wenigstens zwei transparente Folien enthaltend wenigstens einen thermoplastischen Kunststoff gelegt wird, die flächenmäßig mindestens gleich groß sind wie die gemäß b) erhaltene Anordnung,

d) die gemäß c) erhaltene Anordnung laminiert wird.

In einer bevorzugten Ausführungsform des erfindungsgemäßen Verfahrens enthält der in b) in die Aussparung eingebrachte Mehrschichtverbund zusätzlich wenigstens eine weitere transparente Schicht (S) enthaltend wenigstens einen thermoplastischen Kunststoff und wird hergestellt, indem

- auf einer Substratfolie, welche die Schicht (S) bildet, aus einer Photopolymer-Formulierung die Schicht (P) aufgebracht wird, bevorzugt besteht die Schicht (S) aus Polycarbonat bzw. demselben Material wie der Kartenkörper,
- in diese Schicht (P) das Hologramm (H) eingebracht wird
- auf die Schicht (P) anschließend eine Kunststofffolie zur Herstellung der Schicht (O) gelegt wird
- gegebenenfalls auf die Kunststofffolie zur Herstellung der Schicht (O) eine weitere transparente Kunststofffolie zur Herstellung einer weiteren transparenten Schicht gelegt wird
- der so erhaltene Folienstapel zu einem Mehrschichtverbund laminiert wird und
- aus dem Laminat anschließend ein der Aussparung entsprechender Teil ausgestanzt oder ausgeschnitten wird.

Die Erfindung wird im Folgenden anhand von Beispielen näher erläutert.

In den Zeichnungen zeigt die

Figur 1 eine schematische Darstellung einer Folienbeschichtungsanlage zur Herstellung eines Photopolymerfilms;

Figur 2 eine schematische Darstellung einer Apparatur zur Erzeugung eines Hologramms in einem Photopolymerfilm für eine Belichtungswellenlängen von 633 nm (rot);

Figur 3 die elliptische Form eines mit der Apparatur der Figur 2 geschriebenen Hologramms;

Figur 4 eine schematische Darstellung eines ersten erfindungsgemäßen Sicherheitsdokuments;

Figur 5 eine schematische Darstellung eines zweiten erfindungsgemäßen Sicherheitsdokuments;

Figur 6 eine schematische Darstellung eines erfindungsgemäßen dritten Sicherheitsdokuments;

Figur 7 eine schematische Darstellung eines vierten erfindungsgemäßen Sicherheitsdokuments;

Die Figur 1 zeigt in schemataischer Darstellung eine Folienbschichtungsanlage zur Herstellung von Photopolymerfilmen.. In der Figur die einzelnen Bauteile die folgenden Bezugszeichen:

1 Vorratsbehälter

2 Dosiereinrichtung

3 Vakuumentgasungseinrichtung

4 Filter

5 Statischer Mischer

6 Beschichtungseinrichtung

7 Umlufttrockner

8 Trägersubstrat

9 Abdeckschicht

Die Funktion der Anlage ist im Abschnitt "Herstellung von holographischen Medien auf einer Folienbeschichtungsanlage" beschrieben.Figur 2 zeigt eine Apparatur zur Erzeugung eines Hologramms in einem Photopolymerfilm für eine Belichtungswellenlängen von 633 nm (rot). Die Funktion der Apparatur ist im Abschnitt "Herstellung von Reflektionshologrammen im Photopolymer" beschrieben.

Figur 3 zeigt beispielhaft ein mit der Apparatur der Figur 2 erzeugtes Hologramm.

In der Figur 4 ist schematisch ein erstes erfindungsgemäßes Sicherheitsdokument dargestellt. Dieses umfasst zwei Deckschichten (D), eine weiße Kernschicht (W), eine Photopolymerschicht (P) sowie eine transparente optisch schaltbare Schicht (O). Die beiden Deckschichten (D) sind transparent ausgebildet. In die Photopolymerschicht (P) ist ein Hologramm einbelichtet.

Zwischen den Deckschichten (D) ist die weiße Kernschicht (K) angeordnet, die eine ovale Aussparung aufweist. In der Aussparung sind die Photopolymerschicht (P) und die optisch schaltbare Schicht (O) angeordnet. Die Schichten sind miteinander laminiert.

Die Figur 5 zeigt ein weiteres erfindungsgemäßes Sicherheitsdokument. Dieses weicht abweichend zu dem Ausführungsbeispiel der Figur 4 zusätzlich eine weitere transparente Schicht (K) auf, die in der Zeichnung unterhalb der Photopolymerschicht (P) in der Aussparung der weißen Kernschicht (K) angeordnet ist. Die Schicht (K) bewirkt eine bessere Haftung zwischen der Photopolymerschicht (P) und der unteren Deckschicht (D).

In der Figur 6 ist wiederum eine Ausführungsform eines erfindungsgegmäßen Sicherheitsdokuments gezeigt, bei der zusätzlich eine Substratschicht (S) vorhanden ist. Diese ist in der Zeichnung unterhalb der Photopolymerschicht (P) in der Aussparung der weißen Kernschicht (K) angeordnet.

Figur 7 stellt schließlich noch eine weitere Ausführungsform eines erfindungsgemäßen Sicherheitsdokuments dar. Dieses umfasst zusätzlich zu der Ausführungsform der Figur 5 noch eine weitere transparente Schicht (K), die in der Zeichnung oberhalb der transparenten optisch schaltbaren Schicht (O) in der Aussparung der weißen Kernschicht angeordnet ist.

**Beispiele**

**Verwendete Folien:**

Folie 1 (D): Makrofol® ID 6-2, transparente Polycarbonatfolie, eine Seite - matt (6) eine Seite fein matt (2er Seite); 300 μm Dicke (Firma Bayer MaterialScience AG).

Folie 2 (O): Texin® DP7-3007 ist ein Handelsprodukt der Bayer MaterialScience LLC, Deerfield, USA (transparente TPU-Folie, 100 μm Dicke, enthaltend UV- photochromes Pigment).

Folie 3 (P+S): Photopolymerschicht enthaltend ein Volumenreflektionshologramm. Dabei handelt es sich um eine transparente Polycarbonatträgerfolie beschichtet mit einer wie unten beschrieben hergestellten Photopolymerschicht, Gesamtschichtdicke von 143 μm (Firma Bayer MaterialScience AG). In die Photopolymerschicht wird wie unten beschrieben ein Volumenreflektionshologramm einbelichtet.

Folie 4 (W): Makrofol® ID 44-010207, weiße Polycarbonatfolie, 240 μm Dicke (Firma Bayer MaterialScience AG). Die Foliendicke von 4 sollte ca. der Gesamtdicke von Folie 2 und 3 entsprechen, weil aus 2 und 3 Folienstücke ausgestanzt werden, welche in die Aussparung von 4 gelegt werden.

Folie 5 (D):
Makrofol® ID 6-2, transparente Polycarbonatfolie, eine Seite - matt (6), eine Seite fein matt (2er Seite); 300 μm Dicke (Firma Bayer MaterialScience AG).

Photopolymerfolie hergestellt wie nachfolgend unter Herstellung von holographischen Medien auf einer Folienbeschichtungsanlage beschrieben.

**Einsatzstoffe für die holografischen Medien:**

Komponente D: Fascat 4102 0,07 %, Urethanisierungskatalysator, Butylzinn-tris(2-ethylhexanoat), Produkt der Arkema GmbH, Düsseldorf, Deutschland.
Byk® 310 (silikonbasiertes Oberflächenadditiv der Firma BYK-Chemie GmbH, Wesel, 25%ige Lösung in Xylol) 0,3%
Komponente E: C. I. Basic Blue 3 (umgesalzt als Bis-(2-ethylhexyl)sulfosuccinat) 0,26 %, Safranin O (umgesalzt als Bis-(2-ethylhexyl)sulfosuccinat) 0,13 % und Astrazon Orange G (umgesalzt als Bis-(2-ethylhexyl)sulfosuccinat) 0,13% mit CGI 909 (Versuchsprodukt der Fa.BASF SE, Basel, Schweiz) 1,5%, als Lösung in 5,8% Ethylacetat gelöst. Prozentgehalte beziehen sich auf die Gesamtformulierung des Mediums.
Komponente F: Ethylacetat (CAS-Nr. 141-78-6).
Komponente G: Desmodur® N 3900, Handelsprodukt der Bayer MaterialScience AG, Leverkusen, Deutschland, Hexandiisocyanat-basiertes Polyisocyanat, Anteil an Iminooxadiazindion mindestens 30 %, NCO-Gehalt: 23,5 %.
Trägersubstrat: Makrofol® DE 1-1 CC 125 μm (Bayer MaterialScience AG, Leverkusen, Deutschland).

**I. Herstellungsvorschriften weiterer Einsatzstoffe für die holografische Photopolymerfolie:**

Herstellung von der Polyol-Komponente B:

In einem 1 L Kolben wurden 0,18 g Zinnoktoat, 374.8 g ε-Caprolacton und 374.8 g eines difunktionellen Polytetrahydrofuranpolyetherpolyols (Equivalentgewicht 500 g/Mol OH) vorgelegt und auf 120 °C aufgeheizt und so lange auf dieser Temperatur gehalten, bis der Festgehalt (Anteil der nicht-flüchtigen Bestandteile) bei 99.5 Gew.-% oder darüber lag. Anschließend wurde abgekühlt und das Produkt als wachsiger Feststoff erhalten.

Herstellung von Schreibmonomer C1 (Phosphorthioyltris(oxy-4,1-phenyleniminocarbonyloxyethan-2,1-diyl)-triacrylat):

In einem 500 mL Rundkolben wurden 0,1 g 2,6-Di-tert.-butyl-4-methylphenol, 0,05 g Dibutylzinndilaurat (Desmorapid® Z, Bayer MaterialScience AG, Leverkusen, Deutschland) sowie und 213.07 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Anschließend wurden 42.37 g 2-Hydroxyethylacrylat zugetropft und die Mischung weiter auf 60 °C gehalten, bis der Isocyanatgehalt unter 0,1 % gesunken war. Danach wurde abgekühlt und im Vakuum das Ethylacetat vollständig entfernt. Das Produkt wurde als teilkristalliner Feststoff erhalten.

Herstellung von Schreibmonomer C2 (2-({[3-(Methylsulfanyl)phenyl]carbamoyl}oxy)ethylprop-2-enoat):

In einem 100 mL Rundkolben wurden 0,02 g 2,6-Di-tert.-butyl-4-methylphenol, 0,01 g Desmorapid® Z, 11.7 g

3-(Methylthio)phenylisocyanat vorgelegt und vorgelegt und auf 60 °C erwärmt. Anschließend wurden 8.2 g 2-Hydroxyethylacrylat zugetropft und die Mischung weiter auf 60 °C gehalten, bis der Isocyanatgehalt unter 0,1 % gesunken war. Danach wurde abgekühlt. Das Produkt wurde als hellgelbe Flüssigkeit erhalten.

Herstellung des Additives (Bis(2,2,3,3,4,4,5,5,6,6,7,7-dodecafluorheptyl)-(2,2,4-trimethylhexan-1,6-diyl)biscarbamat):

In einem 2000 mL Rundkolben wurden 0,02 g Desmorapid® Z und 3,60 g 2,4,4-Trimethylhexane-1,6-diisocyanat (TMDI) vorgelegt und auf 70 °C erwärmt. Anschließend wurden 11,39 g 2,2,3,3,4,4,5,5,6,6,7,7-Dodecafluorheptan-1-ol zugetropft und die Mischung weiter auf 70 °C gehalten, bis der Isocyanatgehalt unter 0,1 % gesunken war. Danach wurde abgekühlt. Das Produkt wurde als farbloses Öl erhalten.

**II. Herstellung von holographischen Medien auf einer Folienbeschichtungsanlage**

Im Folgenden wird die kontinuierliche Herstellung von holographischen Medien in der Form von Filmen aus Photopolymer-Formulierungen auf der Anlage der Figur 1 beschrieben.

Zur Herstellung der Photopolymer-Formulierung wurden in einem Rührbehälter 304,3g Komponente B (Polyol) schrittweise mit einer Schreibmonomermischung aus 138g C1 und 138g C2, mit 191g Additiv , 0,60g Komponente D, 2,55g BYK® 310 und 101g Komponente F versetzt und gemischt. Anschließend wurden 66,5g Komponente E der Mischung im Dunklen hinzugefügt und vermischt, so dass eine klare Lösung erhalten wurde. Wenn nötig, wurde die Formulierung für kurze Zeit bei 60 °C erwärmt, um die Einsatzstoffe schneller in Lösung zu bringen. Dieses Gemisch wurde in einen der beiden Vorratsbehälter 1 der Beschichtungsanlage eingebracht. In den zweiten Vorratsbehälter 1 wurde die Komponente A (Polyisocyanat) eingefüllt. Beide Komponenten wurden dann jeweils durch die Dosiereinrichtungen 2 im Verhältnis von 942,2 zu 57,8 zur Vakuumentgasungseinrichtung 3 gefördert und entgast. Von hier aus wurden sie dann jeweils durch die Filter 4 in den statischen Mischer 5 geleitet, in dem die Vermischung der Komponenten zur Photopolymer-Formulierung erfolgte. Die erhaltene, flüssige Masse wurde dann im Dunklen der Beschichtungseinrichtung 6 zugeführt.

Bei der Beschichtungseinrichtung 6 handelte es sich im vorliegenden Fall um ein dem Fachmann bekannte Schlitzdüse. Alternativ kann aber auch ein Rakelsystem (Doctor Blade). zum Einsatz kommen. Mit Hilfe der Beschichtungseinrichtung 6 wurde die Photopolymer-Formulierung bei einer Verarbeitungstemperatur von 20 °C auf ein Trägersubstrat (Makrofol 1-1 DE, 125 μm) appliziert und für 5,8 Minuten bei einer Vernetzungstemperatur von 80°C in einem Umlufttrockner 7 getrocknet. Dabei wurde ein Medium in der Form eines Films erhalten, der dann mit einer 40 μm dicken Polyethylenfolie als Abdeckschicht 9 versehen und aufgewickelt wurde.

Die erzielte Schichtdicke des Films lag bei 18 μm.

**III. Herstellung von Reflektionshologrammen im Photopolymer:**

Mittels der Messanordnung der Fig. 2 wurde in das holgraphische Medium gemäß II. ein Hologramm einbelichtet. Dabei handelte es sich um monochromatische Hologramme mit 633 nm Laserwellenlänge. Dazu wurden Stücke des Filmes im Dunkeln abgeschnitten, die Kaschierfolie entfernt und die Filme mit der Photopolymerseite nach unten auf ein Glas der Größe 50 x 75 mm und Dicke 1 mm blasenfrei laminiert. Als Gläser wurden Corning Gläser der Firma Schott AG, Mainz, Deutschland verwendet.

Der Strahl eines Lasers (Emissionswellenlänge 633 nm) wird mit Hilfe einer optionalen Aufweitungslinse (AF) und der Kollimationslinse (CL), die nach dem Shutter S platziert ist auf einen Durchmesser von ~ 3 - 4 cm aufgeweitet. Der Durchmesser des aufgeweiteten Laserstrahls wird dabei durch die Apertur des geöffneten Shutters bestimmt. Es wird bewusst auf eine inhomogene Intensitätsverteilung des aufgeweiteten Laserstrahles geachtet. So beträgt die Randintensität $P_R$ ~ nur die Hälfte der Intensität *Pz* im Zentrum des aufgeweiteten Laserstrahls. P ist hier als Leistung/Fläche zu verstehen. Der aufgeweitete Laserstrahl durchläuft zunächst eine schräg zum Strahl gestellte Glasplatte, die als Shearing Plate (SP) dient. Anhand des nach oben gespiegelten Interferenzmusters, das von den zwei Glasoberflächenreflexen der SP erzeugt wird, kann erkannt werden, ob der Laser stabil im Single Mode emittiert. Dann ist auf einer über der SP platziert Mattscheibe aus dunklen und hellen Streifen zu sehen. Nur wenn Single Mode Emission gegeben ist werden holographischen Belichtungen durchgeführt. Im Falle der DPSS Laser kann der Single Mode durch einstellen des Pumpstroms erreicht werden. Der aufgeweitete Strahl durchläuft das etwa 15° schräg gestellte holographische Medium (P), dieser Teil bildet den Referenzstrahl, um dann vom zu P parallel angeordneten Objekt (O) wieder zurück in P reflektiert zu werden. Dieser Teil bildet dann den Signalstrahl der Denisyukanordnung.

Die Interferenz von Signal- und Referenzstrahl in P erzeugt das Hologramm im holographischen Medium. O besteht aus einer mit weißem Papier bedeckten Metallplatte, wobei die Papierseite P zugewandt ist. Auf dem Papier befindet sich ein quadratisches Raster erzeugt durch schwarze Linien. Die Kantenlänge eines Quadrates beträgt 0.5 cm. Dieses Raster wird bei der holographischen Belichtung von P mit im Hologramm abgebildet.

Die mittlere Belichtungsdosis $E_{ave}$ wird durch die Öffnungszeit *t* von S eingestellt. Bei fixierter Laserleistung *I* stellt *t* daher die zu $E_{ave}$ proportionale Größe dar. Da der aufgeweitete Laserstrahl eine inhomogenene (glockenförmige) Intensitätsverteilung besitzt variiert die lokale Dosis E zur Erzeugung des Hologramms in P. Dies führt, zusammen mit der Schrägstellung von P und O zur optischen Achse dazu, dass das geschriebene Hologramm elliptische Form besitzt, wie in Fig. 5 dargestellt.

Da es sich bei O um einen diffusen Reflektor handelt ist das Hologramm durch Beleuchten mit einer Punktlichtquelle (z. B. Taschenlampe oder LED-Leuchte) leicht zu rekonstruieren.

**IV. Herstellung eines Sicherheitsdokuments:**

a) Das hergestellte Sicherheitsdokument ist in der Figur 4 gezeigt und wurde wie folgt hergestellt: Er wurden folgende Folienbögen unter Verwendung eines Rollenlaminators der Firma GMP Laminart, Model 470 LSI, laminiert. Gewählte Laminiertemperatur: 120°C, Laminiergeschwindigkeit 2,4 m/min:

Folie 2 (O)

Folie 3 (P+S) mit der Photopolymerbeschichtung in Kontakt zu Folie 2.

b) Aus dem laminierten Folienaufbau aus a) wurde ein kreisförmiges Folienstück ausgestanzt, das das einbelichtete Hologramm enthielt.

c) Anschließend wurde in der Folie 4 (W), eine Aussparung entsprechend der Form des Folienstücks aus b) gestanzt. In die Aussparung wurde das unter b) hergestellte Folienstück eingelegt..

d) Auf die Ober- und Unterseite der Anordnung aus c) wurden jeweils eine transparente Folie gelegt, die in ihren Maßen denen der Folie 4 (W) entsprachen und zwar so, dass Folie 1 (TD) mit der Substratseite S von Folie 3 und Folie 5 (TD) mit Folie 2 (O) in Kontakt waren.

e) Die Anordnung aus d) wurde unter Druck und Temperatur zu einem monolithischen Laminat verbunden. Für die Lamination wurde eine Kartenlaminierpresse der Firma Bürckle verwendet. Die Laminationstemperatur wurde auf 190 °Cund der Druck auf 240 $N/cm^2$ eingestellt. Die Presszeit bei 190 °C betrug 4 Minuten. Anschließend wurde für 15 Minuten abgekühlt. Bei einer Temperatur von 38 °C wurde das Laminat aus der Presse genommen.

Bei Betrachtung des fertigen Laminats war im Bereich des Folienstückes aus b) ein transparentes Fenster sichtbar, welches nahtlos mit dem Rest des Laminats verbunden war. Bei Betrachtung des Fensters unter normalem Raumlicht war das Hologramm nur sehr schwach zu erkennen. Bei Beleuchtung des Fensters mit einer UV- Taschenlampe WF 501 B der Firma Ultrafire verdunkelt sich das Fenster und die Sichtbarkeit des Hologramms wurde deutlich verbessert. In dem optisch geschalteten, verdunkelten Zustand war das Hologramm nur von der Seite zu sehen, von der es dem Betrachter direkt zugewandt war, also bei Betrachtung durch die Folie 1. Von der anderen Seite mit direkter Sicht auf die Folie 3, war das Hologramm nicht sichtbar. Einige Minuten nach der UV-Bestrahlung verlor der photochrome Effekt seine Wirkung und das Fenster war wieder transparent.

**Patentansprüche**

1. Sicherheits- und/oder Wertdokument enthaltend wenigstens ein Fenster, wobei das Fenster aus einem Mehrschichtverbund gebildet wird, **dadurch gekennzeichnet, dass** der Mehrschichtverbund

   - wenigstens eine Schicht (P) enthaltend wenigstens ein Photopolymer, in die wenigstens ein Hologramm (H) eingebracht ist und
   - wenigstens eine transparente optisch schaltbare Schicht (O), welche durch Wärme oder Bestrahlung nichttransparent wird,

   aufweist.

2. Sicherheits- und/oder Wertdokument gemäß Anspruch 1, **dadurch gekennzeichnet, dass** es sich bei dem Hologramm (H) um ein Volumenhologramm handelt, bevorzugt ein Reflektionshologramm.

3. Sicherheits- und/oder Wertdokument gemäß Anspruch 1 oder 2, **dadurch gekennzeichnet, dass** es sich bei der transparenten optisch schaltbaren Schicht (O) um eine Schicht enthaltend wenigstens ein photochromes oder thermochromes Material handelt.

4. Sicherheits- und/oder Wertdokument gemäß wenigstens einem der Ansprüche 1 bis 3, **dadurch gekennzeichnet, dass** es sich bei der transparenten optisch schaltbaren Schicht (O) um eine Schicht aus wenigstens einem transparenten thermoplastischen Kunststoff enthaltend wenigstens ein photochromes oder thermochromes Material oder Komposition, bevorzugt aus wenigstens einem transparenten thermoplastischen Polyurethan enthaltend wenigstens ein photochromes oder thermochromes Material oder Komposition handelt.

5. Sicherheits- und/oder Wertdokument gemäß wenigstens einem der Ansprüche 1 bis 4, **dadurch gekennzeichnet, dass** es sich bei dem Photopolymer in der Schicht (P) um ein solches hergestellt aus einer Photopolymer-Formulierung umfassend eine Polyol-Komponente, eine Polyisocyanat-Komponente, ein Schreibmonomer und einen Photoinitiator handelt.

6. Sicherheits- und/oder Wertdokument gemäß Anspruch 5, **dadurch gekennzeichnet, dass** die Photopolymer-Formulierung zusätzlich ein Additiv, bevorzugt ein Additiv gemäß der allgemeinen Formel (III)

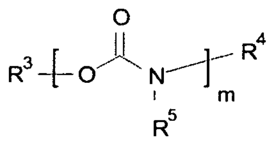

(III)

umfasst, in der m ≥ 1 und m ≤ 8 ist und $R^3$, $R^4$, $R^5$ unabhängig voneinander Wasserstoff, lineare, verzweigte, cyclische oder heterocyclische unsubstituierte oder gegebenenfalls auch mit Heteroatomen substituierte organische Reste sind, wobei bevorzugt mindestens einer der Reste $R^3$, $R^4$, $R^5$ mit wenigstens einem Fluoratom substituiert ist und besonders bevorzugt $R^3$ ein organischer Rest mit mindestens einem Fluoratom ist.

7. Sicherheits- und/oder Wertdokument gemäß Anspruch 5 oder 6, **dadurch gekennzeichnet, dass** das Schreibmonomer in der Photopolymer-Formulierung wenigstens ein monofunktionelles und/oder ein multifunktionelles Urethan(meth)acrylat umfasst.

8. Sicherheits- und/oder Wertdokument gemäß wenigstens einem der Ansprüche 1 bis 7, **dadurch gekennzeichnet, dass** es sich um ein Identifikationsdokument, bevorzugt um eine ID-Karte handelt.

9. Sicherheits- und/oder Wertdokument gemäß wenigstens einem der Ansprüche 1 bis 8, **dadurch gekennzeichnet, dass** das Fenster in das Sicherheits- und/oder Wertdokument derart eingebracht ist, dass sich der restliche innere Teil des Dokuments und das Fenster zwischen wenigstens zwei transparenten Deckschichten enthaltend wenigstens einen thermoplastischen Kunststoff befinden, die flächenmäßig jeweils das gesamte Dokument überdecken.

10. Sicherheits- und/oder Wertdokument gemäß wenigstens einem der Ansprüche 1 bis 9, **dadurch gekennzeichnet, dass** das Fenster wenigstens eine weitere transparente Schicht enthaltend wenigstens einen thermoplastischen Kunststoff enthält, welche sich auf der von der Schicht O abgewandten Seite der Schicht P befindet.

11. Sicherheits- und/oder Wertdokument gemäß wenigstens einem der Ansprüche 1 bis 10, **dadurch gekennzeichnet, dass** das Fenster wenigstens zwei weitere transparente Schichten enthaltend wenigstens einen thermoplastischen Kunststoff enthält, von denen sich eine auf der von der Schicht O abgewandten Seite der Schicht P und die andere auf der von der Schicht P abgewandten Seite der Schicht O befindet.

12. Sicherheits- und/oder Wertdokument gemäß wenigstens einem der Ansprüche 1 bis 12, **dadurch gekennzeichnet, dass** es sich bei den Deckschichten enthaltend wenigstens einen thermoplastischen Kunststoff sowie bei den weiteren transparenten Schichten enthaltend wenigstens einen thermoplastischen Kunststoff im Mehrschichtverbund des Fensters um solche enthaltend wenigstens ein Poly- oder Copolycarbonat handelt.

**13.** Verfahren zur Herstellung eines Sicherheits- und/oder Wertdokument gemäß wenigstens einem der Ansprüche 1 bis 12, **dadurch gekennzeichnet, dass**

a) in einen ein- oder mehrschichtigen Grundkörper für ein Sicherheits- und/oder Wertdokument eine Aussparung eingebracht wird
b) in die Aussparung ein entsprechend der Aussparung zugeschnittener Mehrschichtverbund enthaltend

o wenigstens eine Schicht (P) enthaltend wenigstens ein Photopolymer, in die wenigstens ein Hologramm (H) eingebracht ist, und
o wenigstens eine transparente optisch schaltbare Schicht (O), welche durch Wärme oder Bestrahlung nicht-transparent wird,

eingebracht wird,
c) die gemäß b) erhaltene Anordnung zwischen wenigstens zwei flächenmäßig mindestens gleich große transparente Folien enthaltend wenigstens einen thermoplastischen Kunststoff gelegt wird,
d) die gemäß c) erhaltene Anordnung laminiert wird.

**14.** Verfahren gemäß Anspruch 13, **dadurch gekennzeichnet, dass** der in b) in die Aussparung eingebrachte Mehrschichtverbund zusätzlich wenigstens eine weitere transparente Schicht (S) enthaltend wenigstens einen thermoplastischen Kunststoff enthält und hergestellt wird, indem

• auf einer Substratfolie, welche die Schicht (S) bildet, aus einer Photopolymer-Formulierung die Schicht (P) aufgebracht wird
• in diese Schicht (P) das Hologramm (H) eingebracht wird
• auf die Schicht (P) anschließend eine Kunststofffolie zur Herstellung der Schicht (O) gelegt wird
• gegebenenfalls auf die Kunststofffolie zur Herstellung der Schicht (O) eine weitere transparente Kunststofffolie zur Herstellung einer weiteren transparenten Schicht gelegt wird
• der so erhaltene Folienstapel zu einem Mehrschichtverbund laminiert wird und

aus dem Laminat anschließend ein der Aussparung entsprechender Teil ausgestanzt oder ausgeschnitten wird.

## Claims

**1.** Document of security and/or value, comprising at least one window, the window being formed from a multilayer assembly, **characterized in that** the multilayer assembly has

- at least one layer (P) comprising at least one photopolymer and incorporating at least one hologram (H) and
- at least one transparent, optically switchable layer (O) which becomes non-transparent by means of heat or irradiation.

**2.** Document of security and/or value according to Claim 1, **characterized in that** the hologram (H) is a volume hologram, preferably a reflection hologram.

**3.** Document of security and/or value according to Claim 1 or 2, **characterized in that** the transparent, optically switchable layer (O) is a layer comprising at least one photochromic or thermochromic material.

**4.** Document of security and/or value according to at least one of Claims 1 to 3, **characterized in that** the transparent, optically switchable layer (O) is a layer of at least one transparent thermoplastic comprising at least one photochromic or thermochromic material or composition, preferably of at least one transparent thermoplastic polyurethane comprising at least one photochromic or thermochromic material or composition.

**5.** Document of security and/or value according to at least one of Claims 1 to 4, **characterized in that** the photopolymer in the layer (P) is a photopolymer prepared from a photopolymer formulation comprising a polyol component, a polyisocyanate component, a writing monomer and a photoinitiator.

**6.** Document of security and/or value according to Claim 5, **characterized in that** the photopolymer formulation further comprises an additive, preferably an additive according to the general formula (III)

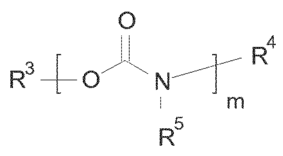

(III)

in which $m \geq 1$ and $m \leq 8$ and $R^3$, $R^4$ and $R^5$ independently of one another are hydrogen or are linear, branched, cyclic or heterocyclic organic radicals which are unsubstituted or else optionally substituted by heteroatoms, at least one of the radicals $R^3$, $R^4$ and $R^5$ preferably being substituted by at least one fluorine atom, and $R^3$ more preferably being an organic radical having at least one fluorine atom.

7. Document of security and/or value according to Claim 5 or 6, **characterized in that** the writing monomer in the photopolymer formulation comprises at least one monofunctional and/or one multifunctional urethane (meth)acrylate.

8. Document of security and/or value according to at least one of Claims 1 to 7, **characterized in that** it is a document of identification, preferably an ID card.

9. Document of security and/or value according to at least one of Claims 1 to 8, **characterized in that** the window is incorporated in the document of security and/or value in such a way that the remaining inner part of the document and the window are located between at least two transparent outer layers which comprise at least one thermoplastic and which two-dimensionally each cover the entire document.

10. Document of security and/or value according to at least one of Claims 1 to 9, **characterized in that** the window comprises at least one further transparent layer which comprises at least one thermoplastic and is located on the side of the layer P that is remote from the layer O.

11. Document of security and/or value according to at least one of Claims 1 to 10, **characterized in that** the window comprises at least two further transparent layers comprising at least one thermoplastic, of which one is located on the side of the layer P that is remote from the layer O and the other is located on the side of the layer O that is remote from the layer P.

12. Document of security and/or value according to at least one of Claims 1 to 12, **characterized in that** the outer layers comprising at least one thermoplastic and the further transparent layers comprising at least one thermoplastic in the multilayer assembly of the window are layers comprising at least one polycarbonate or copolycarbonate.

13. Method for producing a document of security and/or value according to at least one of Claims 1 to 12, **characterized in that**

    a) a recess is incorporated into a single- or multilayer base body for a document of security and/or value,
    b) incorporated into the recess is a multilayer assembly which is trimmed to match the recess and comprises

        o at least one layer (P) comprising at least one photopolymer and incorporating at least one hologram (H), and
        o at least one transparent, optically switchable layer (O) which becomes non-transparent by means of heat or irradiation,

    c) the arrangement obtained according to b) is placed between at least two transparent films which two-dimensionally are of at least equal size and comprise at least one thermoplastic,
    d) the arrangement obtained according to c) is laminated.

14. Method according to Claim 13, **characterized in that** the multilayer assembly incorporated into the recess in b) further comprises at least one further transparent layer (S) comprising at least one thermoplastic, and is produced by

    • from a photopolymer formulation, applying the layer (P) to a substrate film which forms the layer (S)
    • incorporating the hologram (H) into this layer (P)
    • subsequently placing a polymeric film onto the layer (P), for producing the layer (O)

• optionally placing a further transparent polymeric film onto the polymeric film for producing the layer (O), for producing a further transparent layer
• laminating the resulting film stack to form a multilayer assembly and

subsequently, from the laminate, punching or cutting out a part matching the recess.

**Revendications**

1. Document de sécurité et/ou de valeur, contenant au moins une fenêtre, la fenêtre étant formée par un composite multicouche, **caractérisé en ce que** le composite multicouche présente

   - au moins une couche (P) contenant au moins un photopolymère, dans laquelle est introduit au moins un hologramme (H) et
   - au moins une couche (O) transparente, optiquement commutable, qui devient non transparente par la chaleur ou une irradiation.

2. Document de sécurité et/ou de valeur selon la revendication 1, **caractérisé en ce qu'**il s'agit, pour l'hologramme (H), d'un hologramme volumique, de préférence d'un hologramme de réflexion.

3. Document de sécurité et/ou de valeur selon la revendication 1 ou 2, **caractérisé en ce qu'**il s'agit, pour la couche (O) transparente, optiquement commutable, d'une couche contenant au moins un matériau photochrome ou thermochrome.

4. Document de sécurité et/ou de valeur selon au moins l'une quelconque des revendications 1 à 3, **caractérisé en ce qu'**il s'agit, pour la couche (O) transparente, optiquement commutable, d'une couche constituée par au moins un matériau synthétique transparent, thermoplastique contenant au moins un matériau ou au moins une composition photochrome ou thermochrome, de préférence constituée par au moins un polyuréthane transparent, thermoplastique contenant au moins un matériau ou au moins une composition photochrome ou thermochrome.

5. Document de sécurité et/ou de valeur selon au moins l'une quelconque des revendications 1 à 4, **caractérisé en ce qu'**il s'agit, pour le photopolymère dans la couche (P), d'un photopolymère préparé à partir d'une formulation de photopolymère comprenant un composant polyol, un composant polyisocyanate, un monomère d'enregistrement et un photo-initiateur.

6. Document de sécurité et/ou de valeur selon la revendication 5, **caractérisé en ce que** la formulation de photopolymère comprend en outre un additif, de préférence un additif selon la formule générale (III)

   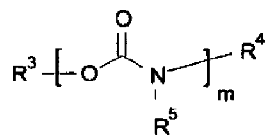

   (III)

   dans laquelle m ≥ 1 et m ≤ 8 et $R^3$, $R^4$, $R^5$ représentent, indépendamment les uns des autres, hydrogène, des radicaux organiques linéaires, ramifiés, cycliques ou hétérocycliques, non substitués ou le cas échéant également substitués par des hétéroatomes, au moins un des radicaux $R^3$, $R^4$, $R^5$ étant de préférence substitué par au moins un atome de fluor et $R^3$ représentant de manière particulièrement préférée un radical organique comprenant au moins un atome de fluor.

7. Document de sécurité et/ou de valeur selon la revendication 5 ou 6, **caractérisé en ce que** le monomère d'enregistrement dans la formulation de photopolymère comprend au moins un uréthane-(méth)acrylate monofonctionnel et/ou au moins un uréthane-(méth)acrylate multifonctionnel.

8. Document de sécurité et/ou de valeur selon au moins l'une quelconque des revendications 1 à 7, **caractérisé en ce qu'**il s'agit d'un document d'identification, de préférence d'une carte d'identité.

**9.** Document de sécurité et/ou de valeur selon au moins l'une quelconque des revendications 1 à 8, **caractérisé en ce que** la fenêtre est introduite dans le document de sécurité et/ou de valeur de manière telle que la partie interne restante du document et la fenêtre se trouvent entre au moins deux couches de recouvrement transparentes, contenant au moins un matériau synthétique thermoplastique, qui recouvrent en surface à chaque fois la totalité du document.

**10.** Document de sécurité et/ou de valeur selon au moins l'une quelconque des revendications 1 à 9, **caractérisé en ce que** la fenêtre contient au moins une autre couche transparente, contenant au moins un matériau synthétique thermoplastique, qui se trouve sur la face de la couche P, opposée à la couche O.

**11.** Document de sécurité et/ou de valeur selon au moins l'une quelconque des revendications 1 à 10, **caractérisé en ce que** la fenêtre contient au moins deux autres couches transparentes, contenant au moins un matériau synthétique thermoplastique, dont l'une se trouve sur la face de la couche P, opposée à la couche O et l'autre se trouve sur la face de la couche O opposée à la couche P.

**12.** Document de sécurité et/ou de valeur selon au moins l'une quelconque des revendications 1 à 12, **caractérisé en ce qu'**il s'agit, pour les couches de recouvrement contenant au moins un matériau synthétique thermoplastique ainsi que pour les autres couches transparentes contenant au moins un matériau synthétique thermoplastique dans le composite multicouche de la fenêtre, de couches contenant au moins un polycarbonate ou un copolycarbonate.

**13.** Procédé pour la fabrication d'un document de sécurité et/ou de valeur selon au moins l'une quelconque des revendications 1 à 12, **caractérisé en ce que**

a) un évidement est introduit dans un corps de base monocouche ou multicouche pour un document de sécurité et/ou de valeur,
b) un composite multicouche, découpé de manière correspondante à l'évidement, contenant

- au moins une couche (P) contenant au moins un photopolymère, dans lequel est introduit au moins un hologramme (H), et
- au moins une couche (O) transparente, optiquement commutable, qui devient non transparente par la chaleur ou une irradiation, est introduit dans l'évidement,

c) la disposition obtenue selon b) est placée entre au moins deux feuilles transparentes au moins identiques en surface, contenant au moins un matériau synthétique thermoplastique,
d) la disposition obtenue selon c) est laminée.

**14.** Procédé selon la revendication 13, **caractérisé en ce que** le composite multicouche introduit dans b) dans l'évidement contient en outre au moins une autre couche (S) transparente contenant au moins un matériau synthétique thermoplastique et est fabriqué **en ce que**

- la couche (P) est appliquée à partir d'une formulation de photopolymère sur une feuille de substrat, qui forme la couche (S),
- l'hologramme (H) est introduit dans cette couche (P),
- une feuille en matériau synthétique est ensuite placée sur la couche (P) pour la réalisation de la couche (O),
- une autre feuille transparente en matériau synthétique, pour la réalisation d'une autre couche transparente est le cas échéant placée sur la feuille en matériau synthétique pour la réalisation de la couche (O),
- la pile de feuilles ainsi obtenue est laminée en un composite multicouche et

une partie correspondant à l'évidement est ensuite estampée ou découpée du laminat.

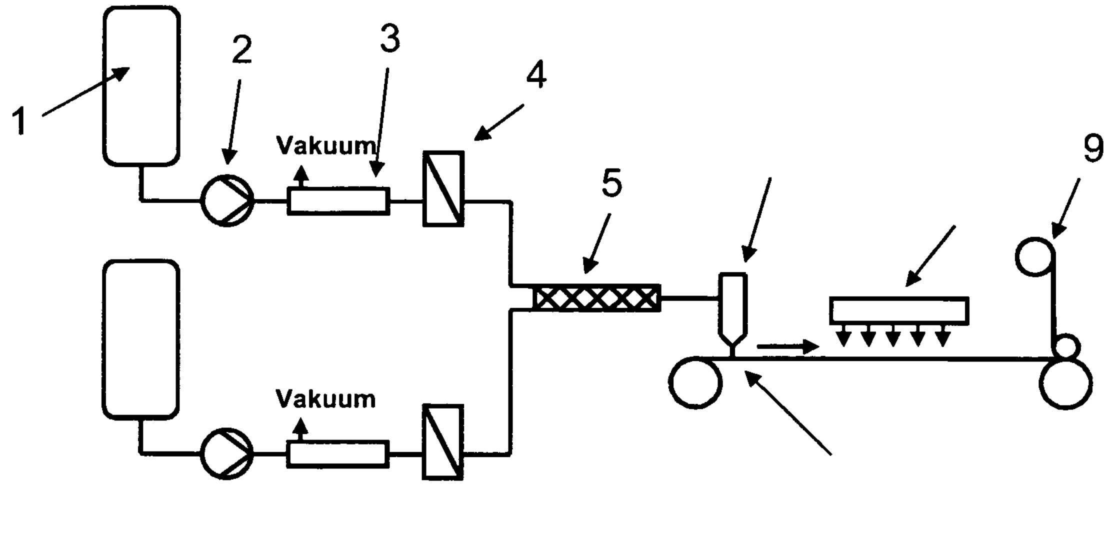


Fig. 1

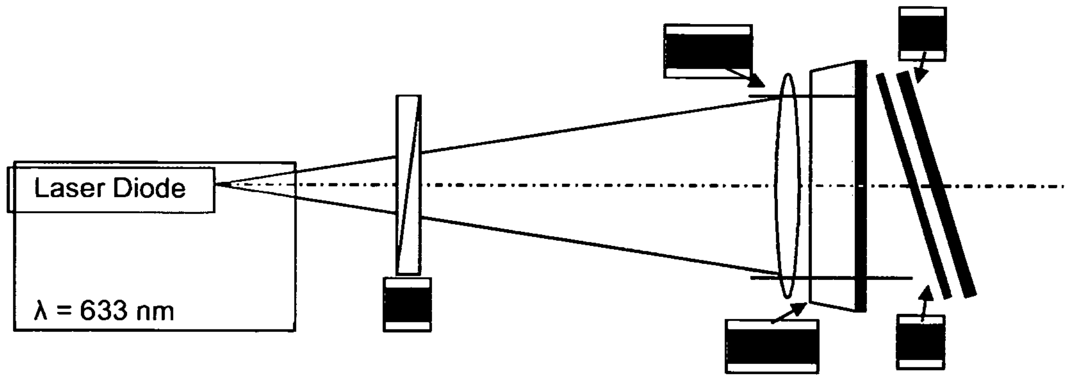


Fig. 2

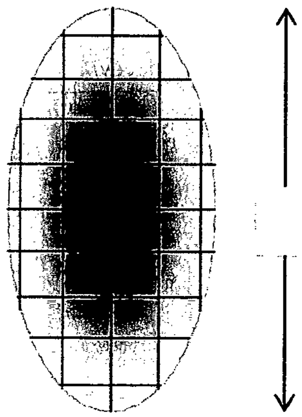

Fig. 3

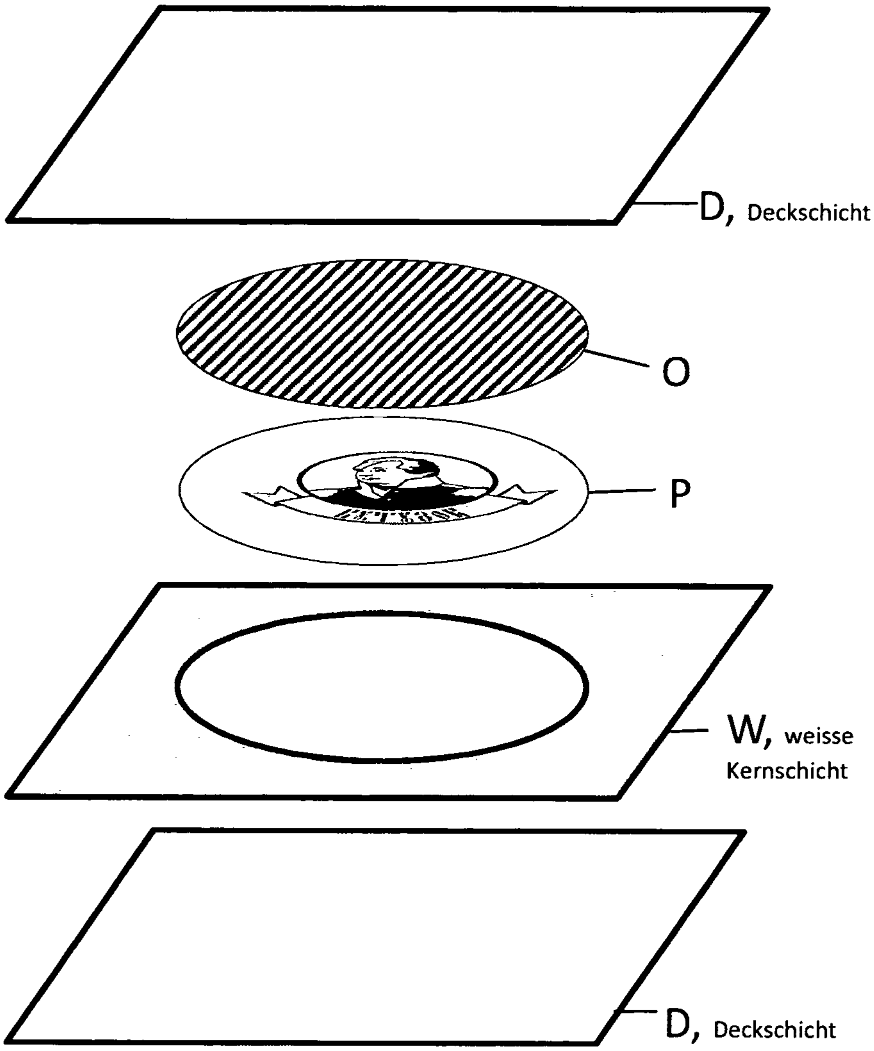


Figur 4

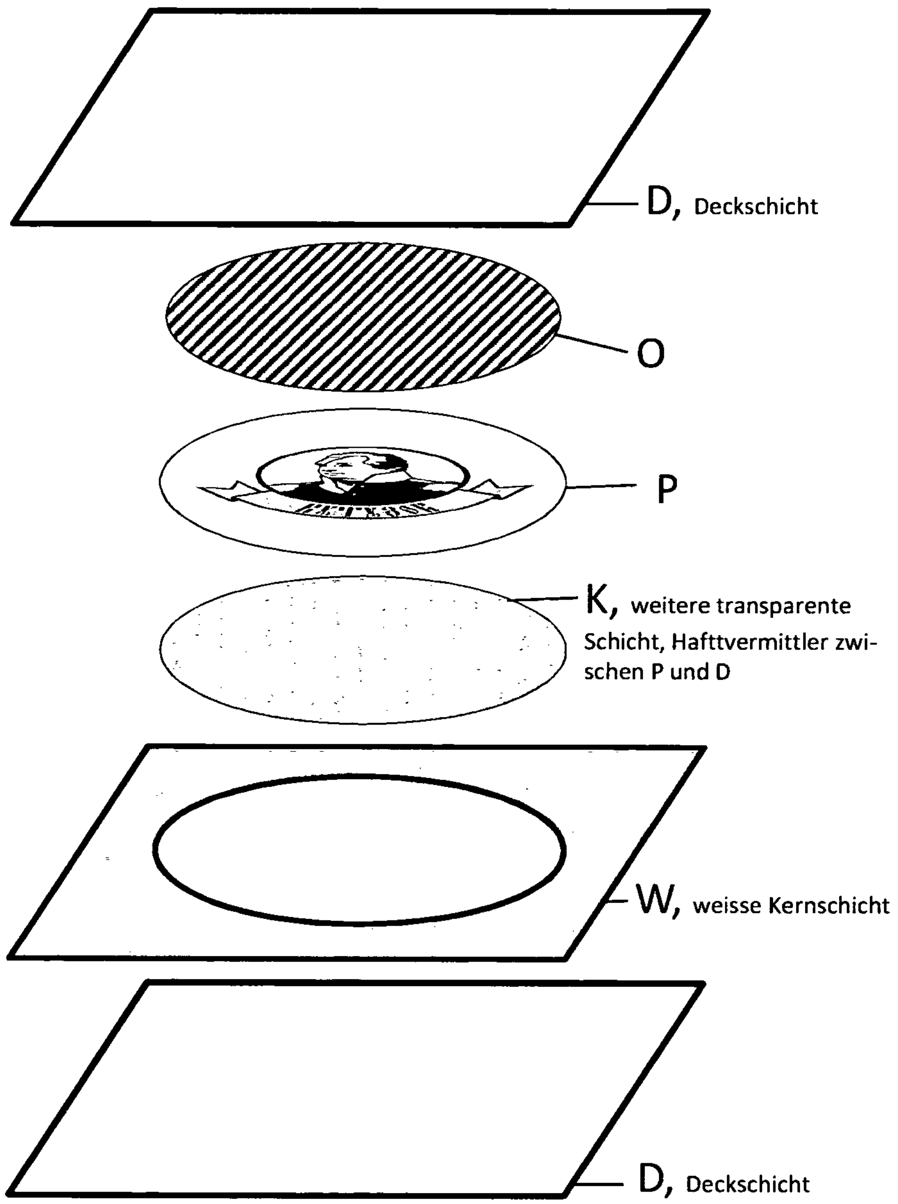
D, Deckschicht
O
P
K, weitere transparente Schicht, Hafttvermittler zwi-schen P und D
W, weisse Kernschicht
D, Deckschicht

Figur 5

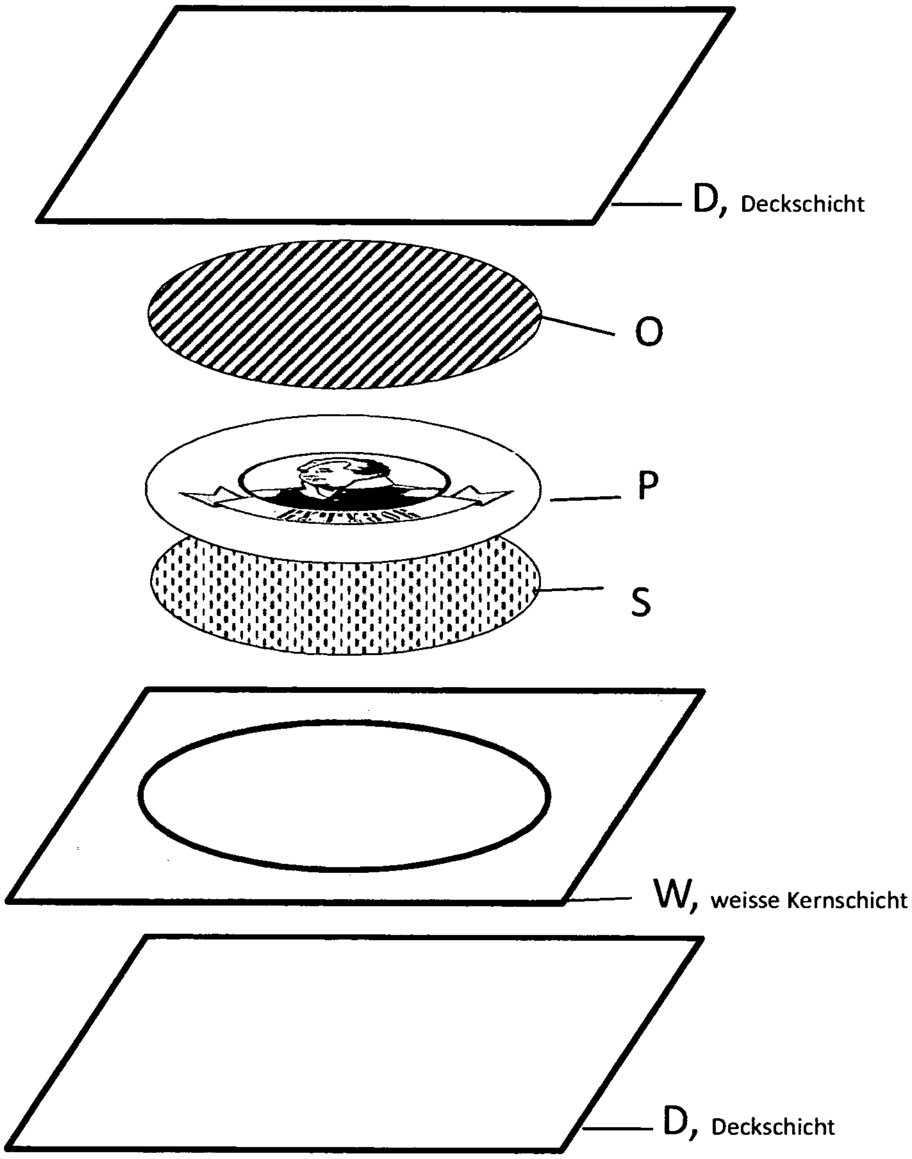


Figur 6

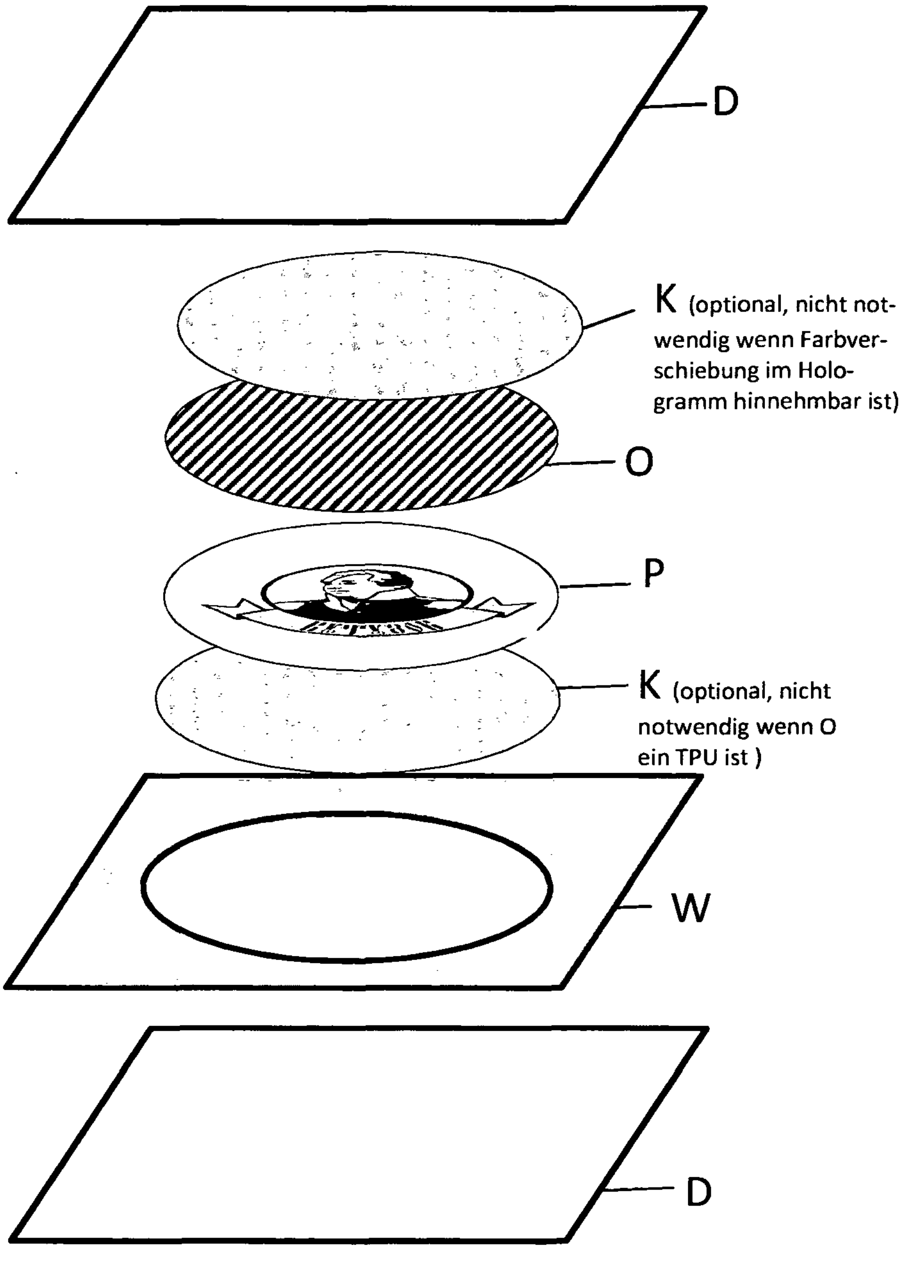
D
K (optional, nicht notwendig wenn Farbverschiebung im Hologramm hinnehmbar ist)
O
P
K (optional, nicht notwendig wenn O ein TPU ist )
W
D

Figur 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2012008313 A
- JP 2012008315 A
- WO 2005121450 A1
- EP 608019 A1
- EP 0613889 A2
- WO 2007147843 A
- WO 2007085636 A
- WO 2006131465 A
- US 2011248224 A
- GB 1057018 A
- DE 1964834 A
- DE 2901774 A
- EP 2172503 A1
- EP 0223587 A


### In der Beschreibung aufgeführte Nicht-Patentliteratur


- **K. NASSAU.** the Physics and Chemistry of Color. John Wiley & sons Inc, 1983, 77 ff
- Methoden der organischen Chemie. **HOUBEN-WEYL.** Makromolekulare Stoffe. Georg Thieme Verlag, 1987, vol. E20, 1587-1593
- *Justus Liebigs Annalen der Chemie,* vol. 562, 75-136
- High Polymers. **J.H. SAUNDERS ; K.C. FRISCH.** Polyurethane. Verlag Interscience Publishers, 1962, vol. XVI, 1, , 2
- **R.GÄCHTER ; H.MÜLLER.** Taschenbuch für Kunststoff-Additive. Hanser Verlag, 1990
- **CUNNINGHAM et al.** *RadTech'98 North America UV/EB Conference Proceedings,* 19. April 1998
- **KUTAL et al.** *Macromolecules,* 1991, vol. 24, 6872
- **YAMAGUCHI et al.** *Macromolecules,* 2000, vol. 33, 1152
- **NECKERS et al.** *Macromolecules,* 2000, vol. 33, 7761
- **LI et al.** *Polymeric Materials Science and Engineering,* 2001, vol. 84, 139
- **DEKTAR et al.** *J. Org. Chem.,* 1990, vol. 55, 639
- *J. Org. Chem.,* 1991, vol. 56, 1838
- **CRIVELLO et al.** *Macromolecules,* 2000, vol. 33, 825
- **GU et al.** *Am. Chem. Soc. Polymer Preprints,* 2000, vol. 41 (2), 1266
- **HUA et al.** *Macromolecules,* 2001, vol. 34, 2488-2494
- Chemistry & Technology of UV & EB Formulations For Coatings, Inks & Paints. SITA Technology, 1991, vol. 3, 61-328
- **H. BERNETH.** Ullmann's Encyclopedia of Industrial Chemistry, Cationic Dyes. Wiley-VCH Verlag, 2008
- **H. BERNETH.** Ullmann's Encyclopedia of Industrial Chemistry, Azine Dyes. Wiley-VCH Verlag, 2008
- **H. BERNETH.** Ullmann's Encyclopedia of Industrial Chemistry, Methine Dyes and Pigments. Wiley-VCH Verlag, 2008
- **T. GESSNER ; U. MAYER.** Ullmann's Encyclopedia of Industrial Chemistry, Triarylmethane and Diarylmethane Dyes. Wiley-VCH Verlag, 2000
- *J. Comput. Aid. Mol. Des.,* 2005, vol. 19, 453